# EUROPEAN PATENT APPLICATION

(11) **EP 4 759 172 A1**
(43) Date of publication of application: **17.06.2026**
(21) Application number: 25222252.6
(22) Date of filing: 10.12.2025
(51) Int. Cl.: A41D 13/018, B60R 21/274

(54) **ACTIVATOR FOR PROTECTIVE DEVICES, PROTECTIVE DEVICE COMPRISING SAID ACTIVATOR**

(30) Priority: 11.12.2024 IT 202400028185
(71) Applicant: D-Air Lab S.r.l., 36100 Vicenza (IT)
(72) Inventor: PICCINOTTI, Alberto, 36040 Sarego (VI) (IT); PARISE, Nicola, 36063 Marostica (VI) (IT)
(74) Representative: PGA S.p.A.

(57) **Abstract**

The present invention relates to an activator (51) for inflatable protective devices (1), wherein the activator comprises a case (52) in which a passage opening (B) for gas is defined and in which a perforator (53) movable between a first and a second operating position is housed. The perforator comprises a base body (54) extending between a first surface (54') and an opposing second surface (54") from which a tip (56) emerges. The ratio between a minimum passage area of the passage opening (B) and an area of the second surface (54") is greater than 0.6, optionally between 0.7 and 1, and even more optionally between 0.9 and 1.

## Description

### FIELD OF THE INVENTION

The present invention refers to an activator for protective devices, as well as a protective device comprising said activator. In particular, the activator can be used to allow gas to be blown into inflatable protective devices, such as airbags. The protective device can be of the wearable type, usable in sport or work field to protect the user's body from impacts, for example in the event of an accident. The protective device can be inserted into or engaged to technical sports clothing, such as jackets, vests, and suits for motorcycling and motorsports, or be an integral part of them. The device object of the present invention can also define self-standing wearable protection. The activator can also be used for vehicle protective devices, such as the car's airbag system.

The activator can also be used for inflatable systems (e.g., protective devices) applicable on industrial robots to ensure impact protection for the robots themselves and for any surrounding operators. The activator can also be used for transport systems - such as backpacks, bags, or similar items - provided with inflation systems, such as avalanche backpacks.

### STATE OF THE ART

Protective devices provided with an inflatable bag activable under specific conditions to protect the user's body from impacts are well known. Protective devices can be of the wearable type or installed as safety systems in vehicles (inflatable airbags in the event of a collision).

Protective devices of the fixed type, installable in specific compartments of vehicles, are inflated by a pyrotechnic system that generates a rapid chemical reaction. This reaction usually involves a small amount of a chemical called sodium azide housed in a metal case. When the car's sensors detect a significant impact, they send an electrical signal that triggers a small pyrotechnic device also located inside the case. The pyrotechnic charge triggers the decomposition of the sodium azide, which rapidly breaks down into nitrogen gas and other substances and expands in about 20-30 milliseconds. During expansion, the nitrogen rapidly exits the case to allow one or more airbags to inflate.

Although such devices are widely used in the automotive sector, the Applicant has noted that they are quite expensive and unsuitable for use in wearable protective devices. In fact, the chemical reaction of the devices described above generates a high amount of heat that could cause serious injuries to a user during the inflation of the bag.

Wearable protective devices comprise a bag housed in a pocket of a garment located in correspondence of areas useful for protecting vital parts of the human body, such as the neck, hips, chest, and spine; the bag is in fluid communication with a carbon dioxide cartridge configured to inflate the bag in a time between 30 and 50 milliseconds. See, for example, the following patent applications: WO2015181734A1, WO2020/115158A1, WO2021/083877A1, WO2011/148354A1, US 2013/0276213A1, WO 2022/013103A1.

The inflating of the bag occurs by perforating a metal membrane located at the closure of an upper passage defined on the head of the cartridge. The membrane can be opened by means of an entirely mechanical activator as described in European patent no. EP3544888B1. This activator comprises a hollow case engageable at the head of the cartridge; in the case is engaged a perforator having an inclined cutting tip configured to pierce the cartridge membrane. The perforator is kept in a locking condition, during which it is placed at a distance from the cartridge, thanks to a mechanical lock; the activation of the perforator occurs by a cord, configured to remove the mechanical lock, allowing the perforator to break the membrane, thus allowing the gas to exit. The movement of the perforator occurs by a compression spring acting in thrust on the bottom of the perforator, opposite the tip.

Pyrotechnically charged activators that can be mounted on the head of a carbon dioxide cartridge are also known from PCT patent application No. WO2017037020A1. The pyrotechnic charge is used to move the perforator, which consists of a movable piston provided with a tip. US 2018/0009406 A1 discloses a pyrotechnic gas generator for inflating airbags in childcare devices, comprising a pyrotechnic charge, an ignition system, and a striker movable inside a duct to pierce a pressurized gas reservoir (e.g. CO₂) and subsequently retract under gas pressure. WO 2014/023953 A1 describes a mechanically actuated triggering system for releasing gas to inflate protective garments, based on a lanyard-activated piston, without any pyrotechnic charge or dual-chamber pneumatic actuation.

Although the activators described above are currently used to allow the inflation of the bags of protective devices, the Applicant has noted that they can be improved in several respects.

### PURPOSE OF THE INVENTION

The purpose of the present invention is to resolve at least one of the drawbacks and/or limitations of the preceding solutions. A first object of the present invention is to make available an activator having a simple and compact structure but which at the same time can ensure the rapid activation of protective devices. A further purpose of the present invention is to make available an activator having a solid structure capable of ensuring the correct operation thereof and preventing malfunctions. It is also the purpose of the present invention to make available an activator extremely safe and that can be flexible in use, i.e., effectively usable for the activation of wearable and fixed protective devices. It is also the purpose of the present invention to make available an activator and a related protective device quickly and at low cost realizable. These and other purposes, which will become clearer from the following description, are substantially achieved by an activator, a protective device, and a system comprising said protective device in accordance with one or more of the attached claims.

### SUMMARY

In one aspect, an activator (51) for inflatable protective devices (1) is provided, wherein the activator (51) comprises:
a case (52) extending between a first and a second end (52a, 52b) along an extension direction (D), wherein the case (52) defines within itself a seat (S) extending along the extension direction (D), wherein the case (52) further comprises:
   at least one through access (A) defined at the second end (52b) and configured to receive at least a part of a pressurized gas container,
   at least one passage opening (B) defined in the case (52) and which places the seat (S) in fluid communication with the through access (A),
a perforator (53) housed in the seat (S) of the case (52) and having a base body (54) extending between a first surface (54'), facing the first end (52a) of the case (52), and a second surface (54") opposed to the first surface (54') and facing the second end (52b) of the case (52), wherein the base body (54) also has a lateral surface (55) at least partially counter-shaped to an internal surface of the seat (S) and joining the first and second surfaces (54', 54"), wherein the perforator (53) further comprises a tip (56) that emerges from the second surface (54") in the direction of the second end (52b) of the case (52), wherein said perforator (53) is movable at least between:
   a first operating position in which the perforator (53)/the base body (54) is spaced from the passage opening (B),
   a second operating position in which at least a part of the tip (56) passes through said passage opening (B).

In an aspect according to the preceding aspect, the second surface (54") of the base body (54) of the perforator (53), in the first and second operating positions, faces the passage opening (B) of the case (52). In an aspect according to any one of the preceding aspects, the perforator (53), in the first operating position, is configured to be positioned with a terminal portion of the tip (56) in correspondence of the passage opening (B) and arranged so that when the pressurized gas container (C) is mounted on the activator (51), the terminal portion is in contact with, or substantially in contact with (very close to) a sealing wall to be punctured of the pressurized gas container (C). Placing the terminal portion to intersect the plane containing the passage opening (B) allows for quicker opening due to a reduction of the perforator stroke. In another aspect according to any of the previous aspects, a length (L2) defined by the distance between the second surface (54") of the base body from which the tip emerges and a point on the perimeter edge that is at a maximum distance from said second surface (54") corresponds to a stroke of the perforator (53) from the first operating position to the second operating position. In an alternative embodiment, , the perforator (53), in the first operating position, is configured to be spaced apart from the pressurized container engageable with the case (52). In an aspect according to any one of the preceding aspects, the perforator (53), in the second operating position, is configured to allow the tip to perforate at least a part of the pressurized container engageable with the case (52). In an aspect according to any one of the preceding aspects, the second surface (54") of the base body (54), in the second operating position, is located near the passage opening (B), in particular in abutment at the passage opening (B). In an aspect according to any one of the preceding aspects, the second surface (54") has a predetermined area, in which the passage opening defines a predetermined minimum passage area, in which the ratio between the minimum passage area of the passage opening (B) and the area of the second surface (54") is greater than 0.6, optionally between 0.7 and 1, and even more optionally between 0.9 and 1, with the predetermined area of the second surface (54") is intended be the entire area of the surface including the part from which the tip (56) emerges. In an aspect according to any one of the preceding aspects, the tip (56), in the second operating position, extends beyond the passage opening (B). In an aspect according to any one of the preceding aspects, the tip (56), in the second operating position, is configured so as to open, but not to damage the pressurized gas container (C) that can be coupled to the case (52).

In an aspect according to any one of the preceding aspects, the predetermined area of the second surface (54") is between 80 mm² and 350 mm², optionally between 120 mm² and 250 mm², and even more optionally between 150 mm² and 200 mm². In an aspect according to any one of the preceding aspects, the minimum passage area of the passage opening (B) is between 60 mm² and 300 mm², optionally between 80 mm² and 200 mm², and even more optionally between 80 mm² and 150 mm².

In one aspect, according to any one of the preceding aspects, the case (52) comprises an auxiliary access (A1) defined at the first end (52a), opposite the through access (A) defined at the second end (52b), the auxiliary access (A1) having an overall dimension allowing the perforator (53) to pass through (for example during assembly of the activator), whereas the passage opening (B) defined in the case (52) has an overall dimension that prevents the perforator (53) from exiting the seat (S), independently of the presence of the pressurised gas container (C). In one aspect, according to any one of the preceding aspects, the passage opening (B) has a cross-section shaped so as to stop the perforator (53) in the second operating position by means of one or more suitable abutment surfaces that receive, in abutment, the second surface (54") of the perforator (53), thereby preventing the perforator from exiting the seat (S). This differentiation between the openings, which allows the perforator (53) to be inserted only from the rear portion of the case (52), enables the device to be assembled easily while ensuring a high level of operational safety. In particular, even in the event of an unintended activation when no pressurized gas cartridge is present, the activator and the corresponding tip, which could otherwise be expelled and cause damage, are always retained within the seat (S). In an aspect according to any one of the preceding aspects, the passage opening (B) has a circular cross-section. In an aspect according to any one of the preceding aspects, the passage opening (B) is delimited by a closed-profile perimeter edge, optionally having a circular shape. In an aspect according to any one of the preceding aspects, the second surface (54") of the base body (54) has a circular shape. In an aspect according to any one of the preceding aspects, the second surface (54") of the base body (54) is delimited by a closed-profile perimeter edge, optionally having a circular shape.

In an aspect according to any one of the preceding aspects, the case (52) comprises a stop element (57) configured to define the passage opening (B). In an aspect according to the preceding aspect, the stop element (57) is configured to receive the perforator (53) in support. In an aspect according to any one of the two preceding aspects, the stop element (57) is configured to contact the second surface (54") of the base body (54) of the perforator (53) when in the second operating position. In an aspect according to any one of the three preceding aspects, the stop element (57) substantially comprises a ring. In an aspect according to the preceding aspect, the ring of the stop element (57) has an inner perimeter edge delimiting the passage opening (B) of the case (52). In an aspect according to any one of the five preceding aspects, the case (52) comprises a hollow body having an inner surface delimiting the seat (S), wherein the stop element (57) is in one piece with the hollow body of the case.

In an aspect according to any one of the preceding aspects, the case (52) further has, at the second end portion (52b), an engagement portion (V1) configured to allow the case (52) to be constrained to a respective engagement portion (C1) of a pressurized gas container (C). In an aspect according to the preceding aspect, the engagement portion (V1) of the case (52) is defined at the through access (A). In an aspect according to any one of the two preceding aspects, the engagement portion (V1) of the case comprises at least one of: an internal thread, an external thread, a bayonet system, a quick coupling.

In an aspect according to any one of the preceding aspects, the case (52) comprises a hollow body having a through cavity extending from the first to the second end (52a, 52b) of the case (52), the case (52) has an auxiliary access (A1) defined at the first end (52a) opposite the through access (A) defined at the second end (52b).

In an aspect according to any one of the preceding aspects, the case (52) has at least one through opening (59) configured to place the seat (S) in fluid communication with the environment outside the case, the through opening (59) is defined at the passage opening (B) of the case and is interposed between the passage opening (B) of the case (52) and the first end (52a). In an aspect according to any one of the preceding aspects, the case comprises a hollow body having a lateral wall with a predetermined thickness. In an aspect according to the preceding aspect, said at least one through opening extends through the entire thickness of the lateral wall of the case. In an aspect according to any one of the preceding aspects, the at least one through opening comprises at least one hole. In an aspect according to any one of the preceding aspects, the at least one through opening has a plurality of through openings. In an aspect according to either of the two preceding aspects, the at least one through opening has a number of through openings between 2 and 12, optionally between 4 and 10. In an aspect according to any one of the preceding aspects, the at least one through opening (optionally the plurality of through openings) defines a total gas passage section smaller than the gas passage section defined by the passage opening (B) of the same case. In an aspect according to any one of the preceding aspects, the total gas passage section defined by the at least one through opening (optionally the plurality of through openings) has a predetermined area, wherein the ratio between the predetermined defined area of the total gas passage section of said at least one through opening (optionally said plurality of passage openings) and the predetermined area defined by the passage opening (B) of the case (52) is between 0.7 and 0.98, optionally between 0.75 and 0.9. In an aspect according to any one of the preceding aspects, each of said through openings (59) comprises a hole. In an aspect according to any one of the preceding aspects, the plurality of through openings (59) is uniformly distributed on the lateral wall of the case substantially along a plane orthogonal to the direction of extension of the case.

In an aspect according to any one of the preceding aspects, the base body (54) of the perforator (53), when the perforator (53) is arranged in the first operating position, is at least partially spaced apart from said at least one through opening (59) and is configured to allow the direct fluid communication between said at least one through opening (59) and the passage opening (B) of the case (52). In an aspect according to any one of the preceding aspects, the base body (54) of the perforator (53), when the perforator (53) is arranged in the second operating position, is arranged at said at least one through opening (59) and prevents a fluid communication between a volume of the seat (S) comprised between the first surface (54') of the perforator (53) and the first end (52a) of the case (52). In an aspect according to any one of the preceding aspects, the base body (54) of the perforator (53), when the perforator (53) is arranged in the second operating position, is configured to substantially (at least partially) prevent the fluid communication between the passage opening (B) of the case (52) and said at least one through opening (59). In one aspect according to any of the preceding aspects, when the perforator (53) is in the first operating position, a first chamber is defined inside the seat (S), between an inner surface of the case (52), the second end (52b) of the case (52), the passage opening (B), and the second surface (54") of the perforator (53), the at least one through opening (59) being in fluid communication with the first chamber and with the passage opening (B), and
wherein, when the perforator (53) is arranged in the second operating position, the at least one through opening (59) is no longer in fluid communication with the first chamber and with the passage opening (B), and a second chamber is defined between the first surface (54') of the perforator (53), an inner surface of the case (52), and a lower surface of an insert (60) associated with the first end (52a) of the case (52), wherein in the second operating position, at least one vent (59') provided in the case (52) allows fluid communication between the second chamber and an external environment, the vent (59') no longer being in fluid communication with the second chamber when the perforator (53) is in the first operating position. The configuration described above provides a number of specific technical advantages.

Firstly, the arrangement of the perforator (53), the passage opening (B), the through openings (59), and the vent (59') enables the definition of two distinct operating chambers within the seat (S). This dual-chamber structure plays a decisive role in optimizing the dynamics of the perforator during activation. In particular, following the activation of the pyrotechnic charge and the consequent expansion of the combustion gases, a second chamber is generated between the first surface of the perforator and the insert (60). This second chamber initially contains the expanding gases responsible for rapidly driving the perforator (53) towards the second operating position, in which the tip (56) perforates the pressurized gas container. When the perforator reaches its end-stroke condition, i.e., the second operating position, the vent (59'), which is closed during the initial thrust phase, opens into fluid communication with the second chamber. This allows the expanding gases to vent externally only after the perforator has substantially completed the stroke required for perforation. Consequently, no premature discharge occurs in the initial phase, and the opening impulse imparted to the perforator remains uncompromised. Once the container membrane has been perforated, the pressurized gas exiting the container cannot vent through the through openings (59), which are obstructed by the base body (54) in the second operating position. As a result, the pressurized gas applies a strong counter-thrust on the second surface of the perforator. This rapidly drives the perforator back towards the first operating position, in which the through openings (59) reopen and the vent (59') is again closed. This coordinated sequence, initial closure of the vent (59'), selective communication of the two operating chambers, obstruction and reopening of the through openings (59), and timed exposure of the vent (59'), maximizes the speed of movement between the two operating positions, ensuring that (i) the forward stroke of the perforator is extremely rapid due to the confinement of the expanding pyrotechnic gases within the second chamber, (ii) the return stroke driven by the pressurized container gas is equally rapid thanks to the selective obstruction of the through openings (59), and (iii) overall inflation times of the protective device are minimized, thereby improving the responsiveness and safety performance of the activator. Furthermore, the positioning and sizing of the through openings (59) and the vents (59') are such that the perforator (53), and in particular the lateral surface (55) of its base body (54), remains constantly guided along the inner surface of the seat (S) throughout its movement between the first and second operating positions. In other words, no portion of the perforator is ever left without a guiding surface due to excessively large or excessively elongated openings on the case (52). This ensures that the perforator always maintains a stable axial alignment within the seat (S), avoiding tilting, misalignment, or jamming during its stroke.

In an aspect according to any one of the preceding aspects, the base body has a predetermined length (L1) defined by the maximum distance between the first and second surfaces (54', 54"). In an aspect according to the preceding aspect, the predetermined length (L1) is measured along the direction of extension (D) of the case (52). In an aspect according to any one of the preceding aspects, the at least one through opening (59) has a predetermined longitudinal dimension. In an aspect according to the preceding aspect, the longitudinal dimension of the at least one through opening (59) is less than the predetermined length (L1) of the base body (54) of the perforator (53). In an aspect according to any one of the two preceding aspects, the ratio between the longitudinal dimension of the at least one through opening (59) and the predetermined length (L1) of the base body (54) of the perforator (53) is less than 1, optionally between 0.4 and 0.9, and even more optionally between 0.4 and 0.7.

In an aspect according to any one of the preceding aspects, the case (52) has at least one vent (59') configured to place the seat (S) in fluid communication with an environment external to the case (52). In an aspect according to the preceding aspect, said at least one vent (59') comprises an opening passing through a lateral wall of the case. In an aspect according to any one of the two preceding aspects, the vent (59'), in the first operating position of the perforator, directly faces the base body (54). In an aspect according to any one of the three preceding aspects, said at least one vent (59') is configured to allow gas to escape from the seat (S) at least during the passage of the perforator (53) from the first to the second operating position.

In an aspect according to any one of the four preceding aspects, said at least one vent (59') is interposed between said at least one through opening (59) of the case (52) and the striker (58). In an aspect according to any one of the five preceding aspects, the case comprises a number of vents (59') between 1 and 4. In an aspect according to any one of the six preceding aspects, the at least one vent (optionally the plurality of vents) defines a total gas passage section smaller than the gas passage section defined by the passage opening (B) of the same case. In an aspect according to any one of the seven preceding aspects, the total gas passage section defined by the at least one vent (optionally the plurality of vents) has a predetermined area, wherein the ratio between the predetermined defined area of the total gas passage section of said at least one vent (optionally by said plurality of vents) and the predetermined area defined by the passage opening (B) of the case (52) is between 0.04 and 0.1, optionally between 0.05 and 0.08. In an aspect according to any one of the eight preceding aspects, each of said vents (59') comprises a hole. In an aspect according to any one of the nine preceding aspects, the case comprises a plurality of vents (59') uniformly distributed on the lateral wall of the case substantially along a plane orthogonal to the direction of extension of the case.

In an aspect according to any one of the preceding aspects, the base body (54) of the perforator (53), when the perforator (53) is arranged in the second operating position, is spaced apart from said at least one vent (59'). In an aspect according to any one of the preceding aspects, the base body (54) of the perforator, when the perforator (53) is arranged in the first operating position, is configured to substantially occlude at least partially said at least one vent (59').

In an aspect according to any one of the preceding aspects, the activator (51) comprises a striker (58) arranged within the case (52). In an aspect according to the preceding aspect, the striker (58) is configured to contact the perforator (53) when in the first operating position. In an aspect according to any one of the two preceding aspects, the striker (58) is configured to define an end-stroke element for the perforator (53). In an aspect according to any one of the three preceding aspects, the striker (58) is configured to directly contact at least part of the first surface (54') of the base body (54) of the perforator. In an aspect according to any one of the four preceding aspects, the perforator (53) is interposed between the stop element (57) and the striker (58).

In an aspect according to any one of the preceding aspects, said at least one through opening (59) is interposed between the passage opening (B) and the striker (58). In an aspect according to any one of the preceding aspects, said at least one vent (59') is interposed between the passage opening (B) and the striker (58).

In an aspect according to any one of the preceding aspects, the activator (51) comprises an insert (60) housed at least partially in the case (52), and arranged substantially at the first end (52a). In an aspect according to the preceding aspect, the insert (60) defines the striker (58). In an aspect according to any one of the two preceding aspects, the insert (60) is engaged in the seat (S) of the case. In an aspect according to any one of the three preceding aspects, the insert is removably engaged to the case (52). In an aspect according to any one of the four preceding aspects, the insert (60) is engaged with the case (52) by means of at least one of: a thread, a bayonet system, a quick coupling, one or more screws, one or more threaded pins.

In an aspect according to any one of the preceding aspects, the case (52) comprises an engagement portion (V2) defined at the first end portion configured to constrain to a respective constraining portion (61) of the insert. In an aspect according to the preceding aspect, the constraining portion (61) of the case comprises an internal thread or an external thread configured to engage respectively an external thread or an internal thread of the engagement portion (61) of the insert (60). In an aspect according to any one of the preceding aspects, the insert (60) extends between a bottom surface (60a) and a top surface (60b) along a respective direction of extension. In an aspect according to the preceding aspect, the direction of extension of the insert (60), at least when the insert (60) is housed in the case (52), is substantially parallel to the direction of extension (D1) of the case (52). In an aspect according to any one of the two preceding aspects, the bottom surface of the insert (60), at least when the insert is housed in the case (52), is arranged substantially at the first end of the case (52). In an aspect according to any one of the three preceding aspects, the top surface (60b) of the insert defines the striker (58) configured to contact the perforator (53). In an aspect according to any one of the four preceding aspects, the insert comprises a lateral surface (60c) connecting the bottom surface to the top surface, wherein at least part of the lateral surface (60c) of the insert (60) is counter-shaped to an inner surface of the case, optionally to the inner surface delimiting at least a part of the seat (S).

In an aspect according to any one of the preceding aspects, the insert (60) has a cavity (62) configured to house a pyrotechnic charge. In an aspect according to the preceding aspect, the cavity (62), when the insert is housed in the case, faces the perforator (53). In an aspect according to either of the two preceding aspects, the cavity (62) of the insert, when the insert is housed in the case (52), is in direct fluid communication with the seat (S). In an aspect according to any one of the two preceding aspects, the cavity (62) of the insert (60), when the insert is housed in the case, directly faces the first surface (54') of the base body (54) of the perforator (53).

In an aspect according to any one of the preceding aspects, the insert (60) is configured to prevent the fluid passage between said insert and an inner surface of the case (52). In an aspect according to any one of the preceding aspects, the insert (60) comprises at least one sealing element (63), optionally a gasket, configured to contact the inner surface of the case (52) in order to prevent the passage of fluid between an outer surface of the case and an inner surface of the case. In an aspect according to any one of the preceding aspects, the activator further comprises an insert (60) housed at least partially in the case (52) and arranged substantially at the first end (52a), the insert (60) being engaged in the seat (S) of the case and comprises a striker (58) arranged within the case (52), wherein the striker (58) is configured to contact the perforator (53) when in the first operating position and to define an end-stroke element for the perforator (53), the perforator (53) being interposed between the striker (58) and a stop element (57) located at the passage opening (B) and configured to receive in abutment the second surface (54") of the base body (54) of the perforator (53) when in the second operating position and blocking an axial movement of the perforator (53) towards the through access (A). In an aspect according to the preceding aspect, the insert (60) has a cavity (62) in direct fluid communication with the seat (S), facing the perforator (53) and configured to house the pyrotechnic charge (65), the cavity (62) of the insert (60) directly facing the first surface (54') of the base body (54) of the perforator (53), and the striker (58) surrounds a lower end of the cavity (62) facing the first surface (54') of the base body (54), in particular the lower end having an area smaller than an area of the first surface (54') of the base body (54), and optionally being centrally located with respect to the extension direction (D). In an aspect according to the preceding aspect, the lower end of the cavity (62) comprises a closure membrane (74) configured to define, together with the cavity (62), a closed volume housing the pyrotechnic charge (65), the closure membrane being configured to open during the pyrotechnic charge (65) explosion and a movement of the perforator (53) from the first to the second operating position. The presence of the membrane (74) closes the cavity (62), thereby keeping the cavity clean, since the insert (60) may be a replaceable component that is handled outside the assembled activator and reinserted into the case (52) after the previous pyrotechnic charge has been activated.

In an aspect according to any one of the preceding aspects, only the tip (56) of the perforator (53) is configured to pass through the passage opening (B). In an aspect according to any one of the preceding aspects, the tip (56) is configured to pass through the passage opening (B) during movement of the perforator (53) from the first to the second operating position. In an aspect according to any one of the preceding aspects, the perforator (53) is movable between the first and second operating positions, and vice versa, along a direction parallel to the direction of extension (D) of the case (52).

In an aspect according to any one of the preceding aspects, the perforator (53) is movable between the insert (60) and the stop element (57). In an aspect according to any one of the preceding aspects, the first surface (54') of the base body of the perforator, in the first operating position, is configured to contact at least part of the striker, optionally the top surface (60b) of the insert. In an aspect according to any one of the preceding aspects, the second surface (54") of the base body of the perforator, in the second operating position, is configured to contact the stop element (57).

In an aspect according to any one of the preceding aspects, only a part of the lateral surface (55) of the base body is configured to contact an internal lateral surface of the case delimiting the seat (S). In an aspect according to any one of the preceding aspects, the lateral surface (55) of the base body has a predetermined extension, wherein a percentage of said extension of the lateral surface (55) of less than 80%, optionally between 50% and 70%, is configured to contact an internal lateral surface of the case delimiting the seat (S).

In an aspect according to any one of the preceding aspects, the lateral surface (55) of the base body (54) of the perforator comprises:
at least one (e.g., two) contact strip configured to contact an internal lateral surface of the case delimiting the seat (S),
at least one recess (55') spaced from, and configured not to contact, the internal lateral surface of the case delimiting the seat (S).

In an aspect according to the preceding aspect, said at least one contact strip is counter-shaped to the inner surface of the housing delimiting the seat (S). In an aspect according to any one of the preceding aspects, the contact strip is configured to contact the inner surface of the case (52) delimiting the seat in the first and second operating positions of the perforator (53). In an aspect according to any one of the preceding aspects, the at least one contact strip extends in height
substantially from the first surface (54') of the base body in the direction of the second surface (54"), and/or
substantially from the second surface (54") of the base body in the direction of the first surface (54').

In an aspect according to any one of the preceding aspects, the at least one contact strip comprises a first and a second contact strip spaced apart from each other by means of the at least one recess (55'). In an aspect according to the preceding aspect
the first contact strip extends from the first surface (54') of the base body towards the second surface (54"),
the second contact strip extends from the second surface (54") of the base body towards the first surface (54').

In an aspect according to any one of the preceding aspects the recess (55') is spaced from the inner surface of the case delimiting the seat (S). In an aspect according to the preceding aspect, the recess (55') is configured to maintain a predetermined minimum distance from the inner surface of the case delimiting the seat (S), optionally during the movement of the perforator (53) between the first and second operating positions, and vice versa. In an aspect according to any one of the preceding aspects, the recess (55') has a minimum distance from the inner surface of the case delimiting the seat (S) greater than 0.2 mm, optionally between 0.3 mm and 1 mm.

In an aspect according to any one of the preceding aspects, the recess (55') has a predetermined surface area, in which the ratio between the surface area of the recess (55') and the predetermined total surface area of the lateral surface (55) of the base body (54) is between 0.2 and 0.7, optionally between 0.25 and 0.5.

In an aspect according to any one of the preceding aspects, the base body (54) has a cylindrical shape. In an aspect according to any one of the preceding aspects, the lateral surface (55) of the base body has, in section along a plane orthogonal to a direction of connection of the first and second surfaces (54', 54"), a substantially circular shape. In an aspect according to any one of the preceding aspects, the first and second surfaces lie on respective planes substantially parallel to each other. In an aspect according to the preceding aspect, the lying planes of the first and second surfaces (54', 54") of the base body (54) are substantially orthogonal to the direction of extension (D) of the case (52). In an aspect according to any one of the preceding aspects, the tip (56) emerges solely from the second surface (54") of the base body (54).

In an aspect according to any one of the preceding aspects, the tip (56) has an inclined cutting surface (56'). In an aspect according to the preceding aspect, the cutting surface (56') of the tip is spaced apart from the second surface of the base body (54). In an aspect according to any one of the two preceding aspects, the cutting surface (56') is inclined with respect to the second surface (54') of the base body (54) from which the tip (56) emerges. In an aspect according to any one of the three preceding aspects, the cutting surface (56') is inclined with respect to the second surface (54") of the base body by an angle between 30° and 80°, optionally between 40° and 70°. In an aspect according to any one of the preceding aspects, the cutting surface (56') has a substantially elliptical shape.

In an aspect according to any one of the preceding aspects, the tip (56) has a substantially cylindrical shape with an oblique cut defining the inclined cutting surface (56'). In an aspect according to any one of the preceding aspects, the tip has a circular section outside the cutting surface. In an aspect according to the preceding aspect, the circular section of the tip (56) defines a predetermined area, in which the ratio between said predetermined area of the tip and the total area of the second surface (54") of the base body (54) is less than 0.5, optionally between 0.5 and 0.3.

In an aspect according to any one of the preceding aspects, the base body has a predetermined length (L1) defined by the maximum distance between the first and second surfaces (54', 54"). In an aspect according to the preceding aspect, the predetermined length of the base body (54) is between 5 mm and 15 mm, optionally between 7 mm and 12 mm. In an aspect according to the preceding aspect, the predetermined length of the base body is measured orthogonally to the lying planes of the first and second surfaces (54', 54") of the base body.

In an aspect according to any one of the preceding aspects, the tip (56) has a predetermined length (L2) defined by the distance between the second surface (54") of the base body from which the tip emerges and a point on the perimeter edge that is at a maximum distance from said second surface (54"). In an aspect according to the preceding aspect, the predetermined length of the tip is measured orthogonally to the lying plane of the second surface (54") of the base body (54). In an aspect according to any one of the preceding aspects, the predetermined length of the tip (56) is less than 12 mm, optionally between 5 mm and 10 mm. In an aspect according to any one of the preceding aspects, the ratio between the predetermined length of the tip (56) and the predetermined length of the base body (54) is between 0.6 and 1, optionally between 0.65 and 0.85.

In an aspect according to any one of the preceding aspects, the tip, in the second operating position of the perforator (53), is arranged in correspondence with at least one through opening (59) of the case (52).

In an aspect according to any one of the preceding aspects, the activator (51) comprises a pyrotechnic charge housed in the case (52) and configured to allow the movement of the perforator (53) from the first to the second operating position. In an aspect according to the preceding aspect, the pyrotechnic charge (65) faces the perforator (53), optionally the first surface (54') of the base body. In an aspect according to any one of the two preceding aspects, the pyrotechnic charge (65) can be activated on command from a control unit.

In an aspect according to any one of the three preceding aspects, the pyrotechnic charge (65) is housed in the cavity (62) of the insert (60).

In an aspect according to any one of the preceding aspects, the case (52) comprises a coupling portion (V3) arranged between the second end (52b) and the at least one through opening (59), said coupling portion (V3) being configured to allow the engagement of the case to an inflatable element,
wherein the coupling portion (V3) comprises at least one cross seat (73) configured to allow the accommodation of one or more cables (75a, 75b) connected to the pyrotechnic charge (65), the at least one cross seat (73) being arranged so that, once the activator (51) is engaged with the inflatable element (2), the cable or cables can pass through the coupling portion (V3) and emerge at the second end (52b) of the case (52).

In an aspect according to the preceding aspect, the case (52) further comprises a gasket (76) and a gasket seat positioned at the coupling portion (V3), the one or more cables (75a, 75b) being interposed between the gasket (76) and the coupling portion (V3).

In an aspect according to any one of the preceding aspects, the at least one cross seat (73) comprises at least one groove, optionally two grooves, each groove comprising a first portion (73a) arranged at a threaded region of the coupling portion (V3) and a second portion (73b) arranged at a ring defined at the second end (52b) of the case (52), wherein no thread teeth are present at said first portion (73a) of the groove (73). In one aspect, there is provided a protective device (1), in particular of the wearable type, said protective device (1) comprising:
at least one activator (51), optionally in accordance with any one of the preceding aspects,
at least one container (C) of pressurized gas, for example carbon dioxide, engaged to the activator (51),
at least one inflatable element (2) engaged to the activator (51) and configurable between a deflated condition and an inflated condition.

In an aspect according to the preceding aspect, the inflatable element (2) comprises a connecting conduit (20) externally engageable with respect to the case (52) of the activator (51) to receive a flow of gas exiting the latter and arriving from the pressurized gas container (C). In an aspect according to the preceding aspect, the inflatable element (2) comprises:
a main body (10) configured to define the part of the inflatable element suitable for protecting a user from impacts,
a connecting conduit (20) integrally joined to the main body.

In an aspect according to the preceding aspect, the connecting conduit (20) is integrally joined to the main body (10) and placed in direct fluid communication with said main body. In an aspect according to any one of the two preceding aspects, the main body (10) and the connecting conduit (20) define a single internal volume of the inflatable element. In an aspect according to any one of the three preceding aspects, the activator (51) is at least partially housed inside the connecting conduit (20) of the inflatable element. In an aspect according to any one of the four preceding aspects, a predominant part of the case (52) of the activator is housed in the connecting conduit (20). In an aspect according to any one of the five preceding aspects, at least the part of the case (52) extending from the first end (52a) to the at least one through opening (59) is substantially arranged in the connecting conduit (20). In an aspect according to any one of the six preceding aspects, the case (52) comprises a coupling portion (V3) arranged between the second end (52b) and the at least one through opening (59), wherein said coupling portion (V3) is configured to allow the engagement of the case to the inflatable element, in particular to the connecting conduit (20). In an aspect according to the preceding aspect, the coupling portion comprises at least one of: an external thread, a bayonet system, a quick coupling.

In an aspect according to any one of the preceding aspects, the engagement portion (V1) is defined inside the case while the coupling portion (V3) is defined outside the case, in contrast to the engagement portion (V1) of the same case. In an aspect according to any one of the preceding aspects, the engagement portion (V1) of the case (52) comprises an internal thread (V1) opposed to an external thread defined by the coupling portion (V3) of the same case. In an aspect according to any one of the preceding aspects, the inflatable element is engaged at the at least one through opening (59) of the case (52). In an aspect according to any one of the preceding aspects, the activator (51) is configured to act on the container (C) to allow its perforation and the consequent exit of gas to allow the inflatable element to pass from the deflated condition to the inflated condition.

In an aspect according to any one of the preceding aspects, the protective device (1) may comprise a connector (70) configured to connect and place the inflatable element (2) in fluid communication with the internal volume of the case. In an aspect according to the preceding aspect, the connector (70) is, on one side, constrained to the coupling portion (V3) of the case (52) and, on the other side, engaged within the connecting conduit (20) of the inflatable element.

In an aspect according to any one of the preceding aspects, the inflatable element (2) is made of sheet material. In an aspect according to any one of the preceding aspects, the inflatable element (2) comprises at least one wall made of sheet material delimiting an internal volume and having at least a first and at least a second portion facing each other.

In an aspect according to the preceding aspect, the first and second portions of the at least one wall of the inflatable element (2), for a predominant part of their surface extension:
in the deflated condition, are substantially adjacent and at least partially in contact with each other,
in the inflated condition, are spaced apart.

In an aspect according to any one of the preceding aspects, said at least one wall of the inflatable element (2), in the inflated condition, defines a larger internal volume than the internal volume defined by the same wall in the deflated condition.

In an aspect according to any one of the preceding aspects, the at least one wall comprises a first wall and a second wall made of sheet material. In an aspect according to the preceding aspect, the first wall has a central area, which defines said first portion of the at least one wall. In an aspect according to any one of the two preceding aspects, the second wall has a central area, which defines said second portion of the at least one wall.

In an aspect according to any one of the three preceding aspects, the first and second walls of the inflatable element (2) are engaged with each other at a peripheral edge to define a single peripheral engagement portion. In an aspect according to any one of the four preceding aspects, the inflatable element (2) consists solely of the first and second walls engaged with each other at a peripheral edge to define a single peripheral engagement portion. In an aspect according to any one of the five preceding aspects, the first and second walls delimit the internal volume of the inflatable element.

In an aspect according to any one of the preceding aspects, the inflatable element (2), in the deflated condition, defines a substantially plate-like (optionally uni-planar) structure. In an aspect according to any one of the preceding aspects, the inflatable element (2) comprises at least one inflatable layer defined by at least one lateral wall extending along a longitudinal trajectory (T), optionally defining a lateral wall having a substantially closed ring shape.

In an aspect according to any one of the preceding aspects, the inflatable element (2) is made at least in part, optionally entirely, of at least one of the following materials: polyurethane, PVC, EVA, polyethylene, polypropylene, silicone rubber, rubber.

In an aspect according to any one of the preceding aspects, each of said first and second walls of the inflatable element (optionally of each of said first and second inflatable layers) consists of a single film of single-layer plastic material. In an aspect according to any one of the preceding aspects, each of said first and second walls of the inflatable element (optionally of each of said first and second inflatable layers) is entirely made of polyurethane, PVC, EVA, polyethylene, polypropylene, silicone rubber, rubber.

In an aspect according to any one of the preceding aspects, the inflatable element (2) is elastically deformable. In an aspect according to any one of the preceding aspects, the inflatable element (2), during the passage from the deflated condition to the inflated condition, is configured to deform substantially elastically. In an aspect according to any one of the preceding aspects, the first and second walls of the inflatable element, during the passage from the deflated condition to the inflated condition, are configured to deform substantially elastically.

In an aspect according to any one of the preceding aspects, the at least one wall of the inflatable element (2), in section along a plane orthogonal to the trajectory of extension of the inflatable element, defines a closed perimeter edge having a predetermined length, wherein the ratio between the length of said perimeter edge in the inflated condition of the inflatable element (2) and the length of the same perimeter edge in the deflated condition of the inflatable element (2) is equal to or greater than 1.2, optionally being between 2 and 6, including the extremes.

In an aspect according to any one of the preceding aspects, the first and second walls are engaged with each other at the fluid-tight peripheral edge, in particular the peripheral edge is configured to substantially prevent the passage of gas. In an aspect according to any one of the preceding aspects, the first and second walls of the inflatable element are engaged with each other at the peripheral edge by at least one of: gluing, welding, sewing. In an aspect according to any one of the preceding aspects, the first and second walls of the inflatable element are welded, optionally heat-sealed, together to define the peripheral edge. In an aspect according to any one of the preceding aspects, the first and second walls of the inflatable element are engaged with each other at the peripheral edge by at least one of the following processes: hot pressing, high-frequency welding, ultrasonic welding.

In an aspect according to any one of the preceding aspects, the activator (51) is configured to allow the exit of gas from the pressurized gas container to allow the passage of the inflatable element (2) from the deflated condition to the inflated condition. In an aspect according to any one of the preceding aspects, the protective device (1) further comprises a control unit connected to and active in commanding the activator (51), wherein the control unit is configured to send a command signal to the activator for moving the perforator from the first to the second operating position.

In an aspect according to the preceding aspect, the protective device (1) further comprises at least one sensor configured to emit a signal representative of a condition of the user, wherein the control unit is configured to:
receive the signal from the sensor,
compare the received signal with at least one threshold value of a control parameter,
determine, based on the comparison, the presence of an accident condition for the user and,
if such an accident condition is determined, send the control signal to the activator (51) to determine the inflated condition of the inflatable element.

In an aspect according to the preceding aspect, the at least one sensor comprises at least one of: a gyroscope, an accelerometer, a GPS. In an aspect according to any one of the two preceding aspects, the activator comprises the pyrotechnic charge, wherein the control unit, if such an accident condition is determined, is configured to generate the explosion of the pyrotechnic charge to allow the movement of the perforator from the first to the second operating position.

In an aspect according to any one of the preceding aspects, the pressurized gas container (C) comprises a head configured to be inserted into the access of the case, wherein the head of the container comprises an opening configured to allow the exit of the pressurized gas, wherein said container (C) comprises a membrane placed at the closure of the opening of the container (C). In an aspect according to the preceding aspect, the membrane is at least partly made of metallic material. In an aspect according to any one of the two preceding aspects, the perforator (53), during the passage between the first and second operating positions, is configured to break the container membrane to allow the exit of the gas. In an aspect according to any one of the preceding aspects, the pressurized gas container comprises a pressurized gas cylinder. In an aspect according to any one of the preceding aspects, the gas present in the pressurized gas container comprises carbon dioxide. In an aspect according to any one of the preceding aspects, the gas in the pressurized gas container has a pressure, optionally in the closed condition of the container, between 30 bar and 70 bar, optionally between 45 bar and 65 bar; optionally, said pressure being measured at a gas temperature of 20 °C. In an aspect according to any one of the preceding aspects, the pressurized gas container has a quantity of carbon dioxide between 5 g and 80 g, optionally between 20 g and 40 g. In an aspect according to the preceding aspect, the amount of carbon dioxide present in the pressurized gas container can be measured by a weighing method; optionally, said weighing method comprises weighing the container before and after filling, wherein the difference in weight substantially corresponds to the amount of carbon dioxide.

In an aspect according to any one of the preceding aspects, the protective device 1 can comprise a heating element engaged with the pressurized gas container (C). In an aspect according to the preceding aspect, the heating element is at least partially in contact with an outer surface of the container (C). In an aspect according to any one of the two preceding aspects, the heating element may be of the active type. In an aspect according to any one of the three preceding aspects, the heating element comprises a heat generator. In an aspect according to any one of the four preceding aspects, the heating element is configured to heat at least a part of the container, optionally to heat the gas present inside it. In an aspect according to any one of the five preceding aspects, the heating element is configured to maintain the gas at a temperature between 30°C and 60°C, and more advantageously between 35° and 45°C. In an aspect according to any one of the six preceding aspects, the heating element comprises at least one electrical resistance, optionally at least partly in contact (e.g., directly or indirectly) with an outer surface of the container (e.g., with a lateral wall and/or a bottom area).

In an aspect according to any one of the seven preceding aspects, the heating element may comprise a component of the passive type, optionally a thermally insulating coating arranged at least partially around the pressurized gas container.

In an aspect according to any one of the eight preceding aspects, the heating element is connected to and controlled by the control unit, optionally the control unit is configured to control the heating element to maintain the pressurized gas container, in particular the gas present in the container, within a desired temperature range. In an aspect according to any one of the eight preceding aspects, the activator (51) and/or the protective device (1) comprises a temperature sensor configured to transmit to the control unit a signal representative of the temperature of the container and/or the gas present therein. In an aspect according to the preceding aspect, the control unit is configured to perform a temperature control procedure comprising the following steps:
receiving the signal from the temperature sensor,
based on the received signal, estimating a value of a temperature of the container and/or the gas present therein,
comparing the estimated temperature value with at least one minimum threshold parameter,
if the temperature value of the container and/or the gas inside is lower than the minimum threshold parameter, sending a control signal to the heating element to heat the container and/or the gas present therein.

In an aspect according to the preceding aspect, the control unit via the control signal is configured to activate the heating element, optionally allowing electric current to pass through the resistance that defines at least part of the heating element.

In one aspect, it is provided a use of the protective device (1) in accordance with any one of the preceding aspects to define at least one of: an integral part of a garment wearable by a user, an integral part of an accessory for protecting a user's neck, a device couplable (fixable or removably engageable) to a garment, a device couplable (fixable or removably engageable) to a protective accessory for a user, a wearable accessory, a carrying system (e.g., at least one of: a backpack, a bag).

In an aspect, it is provided a garment (100) wearable by a user comprising at least one protective device (1) in accordance with any one of the preceding aspects. In an aspect according to the preceding aspect, the garment (100) comprises at least one of: a jacket, a vest, a suit (optionally a motorcycle suit or a motorsport suit), technical sportswear.

### BRIEF DESCRIPTION OF THE DRAWINGS

Some embodiments and aspects of the invention will be described below with reference to the attached drawings, provided for illustrative purposes only and therefore not limiting, in which:

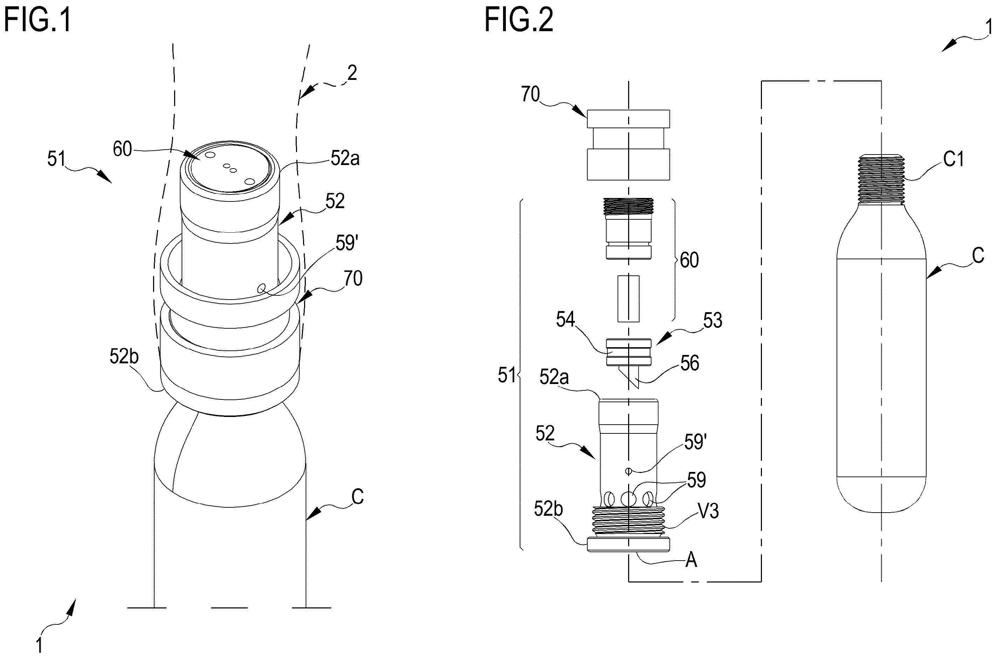

Figure 1 is a perspective view of a protective device according to the present invention;
Figure 2 is an exploded view of a protective device according to the present invention;
Figures 3 and 4 show a case of an activator in accordance with the present invention;
Figures 5 and 6 show a perforator of an activator in accordance with the present invention;
Figure 7 shows an insert of an activator;
Figure 8 is a sectional view of an activator according to the present invention;
Figures 9 and 10 are sectional views of a protective device placed in two different operating conditions;
Figure 11 shows a further protective device in accordance with the present invention;
Figures 12A and 12B are schematic views of a garment comprising a protective device in accordance with the present invention;

### DEFINITIONS AND CONVENTIONS

In this detailed description, corresponding parts shown in the various figures are indicated with the same reference numbers. The figures may show the object of the invention through non-scale representations; therefore, parts and components shown in the figures may be solely schematic representations.

The term *"sheet material"* indicates a structure having two dimensions (e.g., length and width) that are significantly larger than a third dimension (thickness). The sheet material extends in thickness between a first and a second main surface and can be single-layer or multi-layer.

The term *"impermeable"* indicates the ability of a body or a material to prevent the passage of fluids. The wall, and optionally the first and second walls, of the inflatable element are substantially impermeable to gas, i.e., it does not allow a gas, such as air or nitrogen, to pass completely through the thickness of the sheet material.

In this discussion, the term *"breathable"* refers to the permeability of a body or material to a gas, for example air.

The protective device 1 can comprise/use at least one control unit for controlling the operating conditions implemented by itself. The control unit can be a single unit or consist of a plurality of separate control units depending on design choices and operational requirements.

The term *"control unit"* indicates an electronic component, which may comprise at least one of: a digital processor (CPU), an analog circuit, or a combination of one or more digital processors with one or more analog type circuits. The control unit may *be 'configured* or *'programmed'* to perform certain steps: this can be realized in practice by any means that allows to configure or program the control unit. For example, in the case of a control unit comprising one or more CPUs and one or more memories, one or more programs may be stored in appropriate memory banks connected to the CPU or CPUs; the program or programs contain instructions which, when executed by the CPU or CPUs, program or configure the control unit to perform the operations described in relation to the control unit. Alternatively, if the control unit is or comprises analog type circuitry, then the control unit circuit may be designed to include circuitry configured, in use, to process electrical signals in such a manner as to perform the steps relating to the control unit.

At least part of the operation of the protective device described may be performed by a data processing unit, or control unit, technically replaceable with one or more electronic processors designed to execute a portion of software or firmware program loaded onto a memory support. Such software program may be written in any programming language of the known type.

The data processing unit, or control unit, may be a processor of *general-purpose* type configured to perform one or more steps of the operating procedure identified in the present disclosure through the software program or firmware, or it may be an ASIC or dedicated processor or an FPGA, specifically programmed to perform at least part of the operations of the operating procedure.

The memory support may be non-transitory and may be internal or external to the processor, control unit, or data processing unit. The memory support may also be physically divided into multiple portions.

The term *"protection"* is intended as the action of covering a part of the body to absorb shocks due to impacts, or it is understood as the action of supporting and/or assisting a part of the user's body to contain any unwanted movements.

### DETAILED DESCRIPTION

### Activator

The reference sign 51 overall indicates an activator for protective devices 1, optionally of the wearable type. For example, as will be described in more detail below, the protective device 1 can be inserted or engaged to technical sports clothing, for example jackets, vests, and suits for motorcycling and motorsports, or be an integral part of them. Such protective devices are of the type comprising an inflatable element configured to protect a user from impacts; the inflatable element is caused to pass from a deflated condition to an inflated condition under determined conditions that could cause injuries to a user. The inflating of the inflatable element can be performed by means of a container C of pressurized gas, for example carbon dioxide. As will be described in more detail below, this container is normally closed by a membrane, for example made of metal, which, when certain conditions occur, is perforated thanks to the activator 51 to allow the pressurized gas to exit from the container C and inflate the inflatable element 2.

The activator 51 comprises a case 52 extending in length between a first and a second end 52a, 52b, along an extension direction D. The case 52 substantially comprises a hollow body defining a seat S inside it, which extends along the extension direction D. In detail, the case 52 comprises:
- at least one through access A defined at the second end 52b, configured to receive at least a part of a pressurized gas container,
- at least one passage opening B defined in the case in the seat S and which connects the seat S to the through access A.

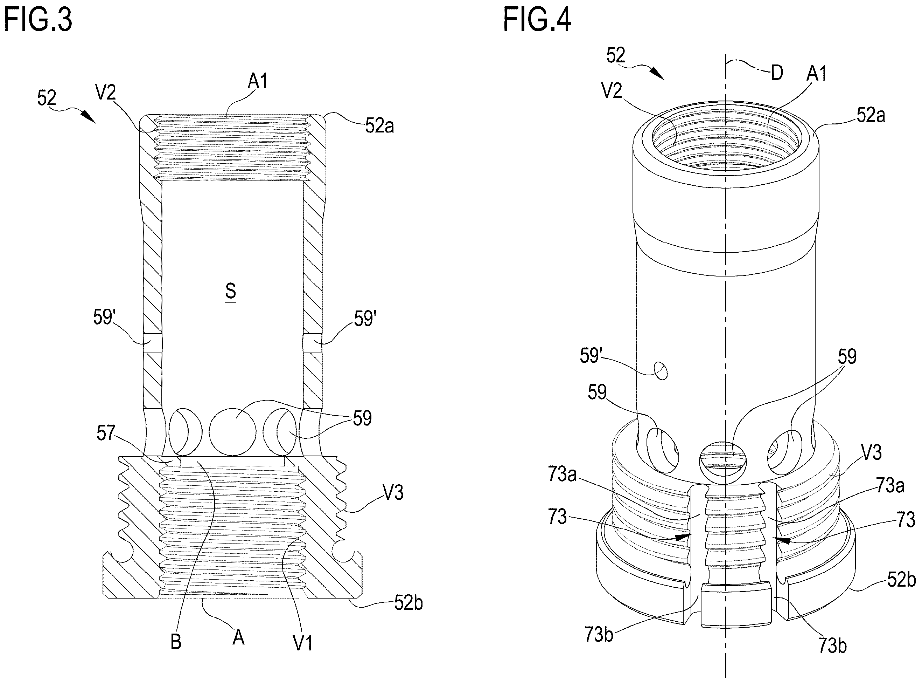

In fact, as can be seen, for example, in Figure 3, the case 52 is substantially open at the second end 52b due to the presence of the access A. The case 52 may be, in a non-limiting way, entirely hollow as shown in Figure 3, or have an auxiliary access A1 defined at the first end 52a opposite the passage access A and in fluid communication with the latter; alternatively, the hollow body of the case 52 may have a cavity extending only for a predominant part of the case 52 in the direction of the first end 52a.

In detail, this internal cavity of the case can be defined, starting from the second end in the direction of the first end, by the through access A in direct fluid communication with the passage opening B which communicates directly with the seat S. The case 52 may have a substantially cylindrical structure. In this configuration, the external and inner surfaces of the case 52 are substantially circular in shape. Obviously, the possibility of realizing a case having a different shape is not excluded. In the attached figures is shown a through access A having a circular cross-section. The passageway is configured to allow the head of the pressurized gas container C to be inserted into the case so that, after the opening of the container C (opening that occurs at the head) the pressurized gas in the container C can flow into the case.

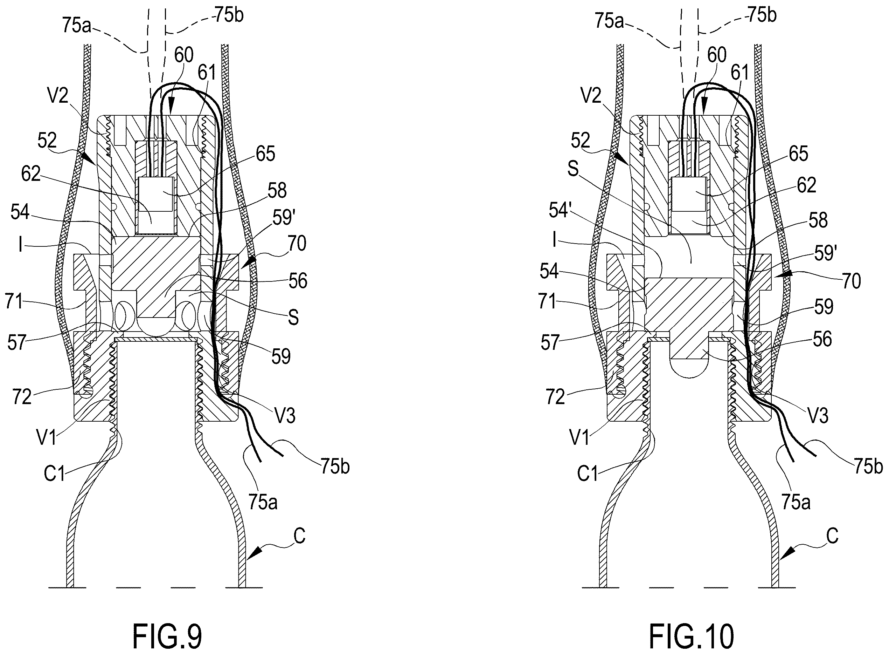

As visible, for example, in Figure 3, the case 52 has, at the second end 52b, an engagement portion V1 configured to allow the constraining of the case 52 to a respective engagement portion C1 of a pressurized gas container C. The engagement portion V1 of the case 52 is defined at the through access A and may comprise at least one of: an internal thread, an external thread, a bayonet system, a quick coupling. In the attached figures is shown, in a non-limiting way, a coupling portion V1 comprising an internal thread configured to allow the screwing of the container (at least the head of the container) into the access A (Figures 9 and 10).

As above mentioned, in the case is also defined the passage opening B. In fact, the passage opening B substantially defines, together with the through access A, the cavity of the case 52. The passage opening is located immediately after the access A, in particular after the engagement portion V1, according to a direction connecting the second end 52b with the first end 52a of the case 52.

The passage opening B may be delimited by a closed-profile perimeter edge, optionally having a circular shape. The passage opening B can substantially be considered a continuation of access A. However, the passage opening B can define a sort of narrowing to substantially define an end-stroke for the container C. In detail, the case 52 can comprise a stop element 57 arranged in the seat S and configured to define the passage opening B. The stop element 57 may substantially comprise a ring having an inner edge delimiting the passage opening B of the case 52. The stop element 57 may be in one piece with the inner surface of the case 52, as shown, for example, in Figure 3.

For example, the passage opening B can define a minimum passage area between 60 mm² and 300 mm², optionally between 80 mm² and 200 mm², or even more optionally between 80 mm² and 150 mm². If the passage opening has a circular perimeter edge, it may have a diameter between 10 mm and 20 mm, optionally between 12 mm and 18 mm.

As above mentioned, the case 52 has a seat S inside it. In particular, the seat S is adjacent to the passage opening B as opposed to the access A: the passage opening B is interposed between access A and seat S. As will be described in more detail below, the seat S represents the internal section of the case configured to receive a perforator 53 movable by sliding inside seat S.

The seat S is delimited by an internal surface having, in a non-limiting way, a substantially cylindrical shape: in particular, the internal surface of the seat S, in section along a plane orthogonal to the direction of extension D of the case 52, defines a perimeter having a circular shape. Obviously, the possibility of creating a seat having an internal section having a different shape is not excluded. In detail, the seat S has a constant section along its entire length, i.e., along the direction of extension D of the case. In even greater detail, the seat S defines a passage section having a predetermined area, which may be equal to or greater than the passage section of the passage opening B. The ratio between the predetermined area of the passage opening B and the predetermined area of the passage section of the seat S may be greater than 0.6, optionally between 0.7 and 1, or even more optionally between 0.9 and 1.

From a quantitative profile, the predetermined area defined by the passage section of the seat S may be between 60 mm² and 300 mm², optionally between 80 mm² and 200 mm², and even more optionally between 80 mm² and 150 mm². As described above, in one embodiment, the seat S may have a substantially cylindrical shape; in this configuration, the seat S may have, in section along a plane orthogonal to the direction of extension D of the case 52, a diameter between 10 mm and 20 mm, optionally between 12 mm and 18 mm.

The activator 51 may further comprise a striker 58 also arranged inside the case 52: the striker, together with the stop element 57, delimits the seat S longitudinally. In fact, as mentioned above, the activator 51 also comprises a perforator 53 movable inside the seat S; the stop element 57 and the striker 58 define respective end strokes for the perforator 53. The striker can be defined as fixed and joined to the inner surface of the case or as shown in the attached figures can be defined by an insert 60 engaged in the case 52.

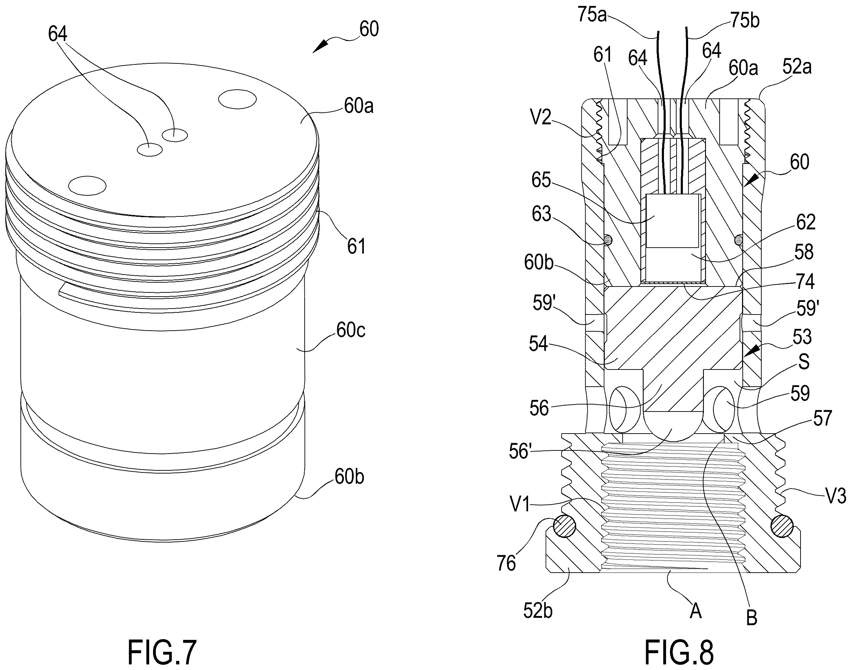

As shown in Figure 8, in fact, the case 52 may comprise an engagement portion V2 defined at the first end 52a and configured to constrain to a respective engagement portion 61 of the insert. The engagement portion V2 of the case 52 may comprise an internal thread or an external thread configured to engage respectively an external thread or an internal thread of the engagement portion 61 of the insert 60. In the attached figures, in a non-limiting way, an engagement portion V2 of the case defined by an internal thread extending from the first end 52a towards the second end 52b; this engagement portion allows to engage the insert reversibly at the first end 52a so that at least part of the insert itself can define the striker 58. Obviously, the possibility of creating different engagement systems between the insert and the case capable of defining a reversible constraint between the parts so that the insert 60 can be easily removed from the case without damaging the activator is not excluded; for example, different engagement systems may comprise at least one of: a bayonet system, a quick coupling.

The seat S therefore has a length defined by the minimum distance between the passage opening B (in particular the stop element 57) and the striker 58 (in particular the part of the insert 60 that defines said striker); this length can be between 10 mm and 25 mm, optionally between 12 mm and 20 mm.

The insert 60 extends between a bottom surface 60a and a top surface 60b along a respective direction of extension which, at least when the insert 60 is housed in the case 52, is substantially parallel to the direction of extension D of the case 52. The bottom surface of the insert 60, at least when the insert 60 is housed in the case 52, is substantially arranged at the first end 52a of the case 52, while the top surface 60b of the insert defines the striker 58 configured to contact the perforator 53. The top surface 60b is spaced from the first end 52a of the case. In effect, the insert 60 is substantially housed entirely within the case 52.

The insert 60 comprises a lateral surface 60c connecting the bottom surface to the top surface 60b: at least part of the lateral surface 60c of the insert 60 is counter-shaped to an inner surface of the case. In detail, the insert 60 is configured to substantially define a fluid tight element configured to prevent gas from exiting from the first end. Therefore, the outer surface of the insert 60 is at least partially counter-shaped and at least partially in contact with the inner surface of the case 52. However, the insert 60 may comprise a sealing element 63, optionally a gasket, configured to contact the inner surface of the case 52 to prevent the passage of fluid between an outer surface of the case and an inner surface of the case (see, for example, Figure 8).

In greater detail, the insert has a substantially cylindrical shape having, from the bottom surface 60a, the constraining portion extending in direction of the top surface 60b. The sealing element 63 is constrained in a groove defined substantially on the outer surface of the insert 60, at a portion of the longitudinal centerline.

The insert 60 may be free of cavities at the bottom surface 60a and the top surface 60b. Alternatively, in a non-limiting way, the insert 60 may comprise a cavity 62 configured to house a pyrotechnic charge 65. When the insert 60 is housed in the case, the cavity 62 faces the perforator 53 arranged in the seat S. The cavity 62 of the insert, when the insert 60 is housed in the case 52, is in direct fluid communication with the seat S and directly faces the perforator 53.

The cavity 62 may have, in a non-limiting way, a substantially cylindrical shape. The cavity 62 may be blind or extend from the top surface 60b towards the bottom surface, maintaining a distance from the latter. However, the insert may include one or more passages 64 (see, for example, Figure 7) extending from the bottom surface 60a to the cavity 62; in fact, each passage 64 is configured to place the cavity in fluid communication with the outside of the case. In detail, each channel is configured to allow the passage of one or more cables 75a, 75b that connect the pyrotechnic charge 65 to a control unit configured to command the activation of the charge 65.

In the attached figures it is shown an insert having two passages 64, each of which is configured to allow the passage of an electrical cable. Obviously, the possibility of providing a single passage 64 suitable for allowing the passage of two or more cables is not excluded.

As can be seen from the attached figures, the case 52 comprises at least one through opening 59 configured to connect the seat S to the environment outside the case 52. The through opening 59 is defined at the passage opening B of the case, in particular interposed between the passage opening B of the case 52 and the first end 52a, in greater detail between the passage opening B and the striker 58. More specifically, said at least one through opening 59 is arranged immediately after the stop element 57 with respect to the direction of extension D of the case 52. In detail, the distance between the at least one through opening 59 and the stop element 57 suitable for delimiting the passage opening B is less than 5 mm, optionally less than 3 mm, and even more optionally less than 2 mm. In fact, the at least one through opening 59 is configured to allow the exit of gas that exiting from the container C passes through the passage opening B. The position of the at least one through opening 59 located near the passage opening B allows the gas to exit quickly from the case as soon as it passes through the passage opening B.

As above mentioned, the case comprises a hollow body having a lateral wall with a predetermined thickness; said at least one through opening 59 passes through the entire thickness of the lateral wall of the case. In detail, each through opening 59 substantially comprises a hole. In the attached figures it is shown an embodiment of the case 52 having, in a non-limiting way, a plurality of through openings. In particular, the case 52 may comprise a number of through openings 59 between 2 and 12, optionally between 4 and 10. The plurality of through openings 59 is uniformly distributed on the lateral wall of the case 52 substantially along a plane orthogonal to the direction of extension of the case 52.

Said at least one through opening 59 (optionally the plurality of through openings) defines a total gas passage section smaller than the gas passage section defined by the passage opening B of the same case. In detail, the total gas passage section defined by the at least one through opening 59 (optionally the plurality of through openings) has a predetermined area: the ratio between the predetermined defined area of the total gas passage section of said at least one through opening 59 (optionally by said plurality of through openings) and the predetermined area defined by the passage opening B is between 0.7 and 0.98, optionally between 0.75 and 0.9. With total passage area is intended the sum of the passage areas of the through openings 59 present on the case 52.

As can be seen from the attached figures, the case 52 may also include at least one vent 59' configured to place in fluid communication the seat S to an environment outside the case 52. The vent 59' comprises an opening passing through the lateral wall of the case 52; in particular, said vent may comprise a circular section hole as shown in Figure 4.

Said at least one vent 59' is interposed between said at least one through opening 59 of the case 52 and the striker 58. The case may comprise a number of vents 59' between 1 and 4. If there is a plurality of vents, these may be uniformly distributed on the lateral wall of the case 52 substantially along a plane orthogonal to the direction of extension D of the case. In the attached figures it is shown a form of the case having, in a non-limiting way, two vents 59' substantially facing each other (Figure 8).

The at least one vent 59' (optionally the plurality of vents 59') defines a total gas passage section smaller than the gas passage section defined by the passage opening B of the same case. In particular, the total gas passage section defined by the at least one vent 59' (optionally the plurality of vents) has a predetermined area: the ratio between the predetermined defined area of the total gas passage section of said at least one vent 59' (optionally by said plurality of vents) and the predetermined area defined by passage opening B of the case 52 is between 0.04 and 0.1, optionally between 0.05 and 0.08.

As mentioned, the activator 51 also comprises a perforator 53 housed in the seat S of the case 52 and having a base body 54 extending between a first surface 54', facing the first end 52a of the case 52, and a second surface 54" opposed to the first surface 54' and facing the second end 52b of the case 52. The base body 54 also has a lateral surface 55 at least partially counter-shaped to an inner surface of the seat S, which joins the first and second surfaces 54', 54"; the perforator 53 also comprises a tip 56 that emerges from the second surface 54" in the direction of the second end 52b of the case 52. The perforator 53 is movable within the seat S at least between:
a first operating position in which the perforator 53/the base body 54 is spaced from the passage opening B,
a second operating position in which at least a part of the tip 56 passes through the passage opening B.

In fact, the stop element 57 that delimits the passage opening B defines, on one side, a stop for the container and, on the other side, a stop for the base body 54 of the perforator 53; the movement of the perforator 53 between the first and second operating positions allows the tip 56 to pass through the passage opening B, reach the container to allow the opening and the consequent exit of gas, which spreads into the seat to escape from the case thanks to the presence of at least one through opening 59.

As mentioned above, the lateral surface 55 of the base body 54 is at least partially counter-shaped to the internal surface of the seat S. In detail, the lateral surface 55 is configured to contact at least a part of the internal surface of the seat to substantially define a sort of piston having a transverse dimension substantially equal to the transverse dimension defined by the internal surface of the seat. In even greater detail, the lateral surface 55 of the base body defines, with the inner surface of the seat S, a gap of reduced dimension configured to allow the movement (e.g. the sliding) of the base body 54 in the seat. In fact, the base body 54 has a size such that it substantially occupies the passage section defined by the seat S so that it can effectively exploit the thrust generated by the pyrotechnic charge 65. In this way, the perforator 53 is able to move quickly in the seat to allow the rapid opening of the container and, consequently, the passage of gas. In fact, the first and second surfaces 54', 54" define a predetermined area which is substantially equal to the passage section of the seat S. In detail, the first and second surfaces are substantially identical in both geometric and dimensional terms; these surfaces therefore define then the same surface area. As mentioned above, the perforator has a tip 56 that emerges from the second surface 54"; as predefined area of the second surface is also intended the part of the surface from which the tip 56 emerges, i.e., occupied by the latter. In even greater detail, the ratio between the predetermined area of the first or second surface 54', 54" and the area of the passage section defined by the seat is between 0.95 and 1, optionally between 0.97 and 1. Quantitatively, the predetermined area of the first or second surface of the base body 54 is between 80 mm² and 350 mm², optionally between 120 mm² and 250 mm², and even more optionally between 150 mm² and 200 mm².

The base body 54 therefore has a substantially cylindrical shape: the first and second surfaces 54', 54" both have a circular shape and extend along planes substantially parallel to each other, in particular orthogonal to the direction of extension D of the case 52.

The second surface 54" of the base body 54 of the perforator 53, optionally in the first and second operating positions, faces the passage opening B of the case 52. The perforator 53, in the first operating position, is configured to be spaced from the pressurized container C engageable to the case 52, while, in the second operating position, the perforator 53 is configured to allow the tip 56 to perforate at least a part of the pressurized container C engageable to the case 52. The second surface 54" of the base body 54, in the second operating position, is located near the passage opening B, in particular, the second surface 54", in the second operating position, is configured to contact the stop element 57, which acts as a locking element for the perforator 53. In this way, only the tip 56 of the perforator passes through the passage opening B, while the base body 54 is configured to remain, in any position of the perforator, inside the seat S.

The first surface 54' therefore defines the thrust surface that is used by the pyrotechnic charge 65 to move the perforator 53 from the first to the second operating position. The second surface 54" of the base body 54, on the other hand, defines the thrust surface that allows the perforator 53 to move from the second to the first operating position. In detail, the second surface 54" of the base body 54, following the perforation of the pressurized gas container C, allows the gas to act as a thrust on the second surface 54" and thus move the perforator from the second to the first operating position.

However, as mentioned above, the pressurized gas container C is housed in the access A of the case 52 in such a way that, once the perforator 53 has reached the second operating position, it can perforate a head of the container and allow the gas to exit, entering the case 52. The gas exiting from the container is related to the size of the passage generated on container C as well as the section of passage opening B of the case, which represents the passage section encountered by the gas before reaching the base body 54. The passage opening B defines then a predetermined minimum passage area, in which the ratio between the minimum passage area of the passage opening B and the area of the second surface 54" is greater than 0.6, optionally between 0.7 and 1, and even more optionally between 0.9 and 1. In fact, the passage opening has a size as to allow an adequate stop of the perforator 53, preventing the latter from exiting from the access A (for example, in the event of accidental activation by the pyrotechnic charge, in the absence of the pressurized gas container C) and at the same time facilitates the rapid expulsion of gas into the seat S, improving the speed of movement of the perforator and therefore the expulsion of gas from the case.

As mentioned above, the lateral surface 55 is at least partially counter-shaped to the internal surface of the seat. As shown in the section of Figure 8, only a part of the lateral surface 55 of the base body 54 is configured to contact an internal surface of the case delimiting the seat S. In detail, the lateral surface 55 of the base body 54 has a predetermined extension, and a percentage of said extension of the lateral surface 55 of less than 60%, optionally between 20% and 50%, is configured to contact an internal surface of the case delimiting the seat S. In greater detail, the lateral surface 55 of the base body 54 of the perforator comprises:
at least one contact strip configured to contact an internal surface of the case delimiting the seat S,
at least one recess 55' spaced from the inner surface of the case delimiting the seat S.

Said at least one contact strip is counter-shaped to the inner surface of the case delimiting the seat S, configured to contact the inner surface of the case 52 delimiting the seat S in the first and second operating positions of the perforator 53. The at least one contact strip extends in height
substantially from the first surface 54' of the base body in the direction of the second surface 54",
substantially from the second surface 54" of the base body towards the first surface 54'.

In detail, the at least one contact strip comprises a first and a second contact strip spaced apart from each other by means of the at least one recess 55'. The first contact strip extends from the first surface 54' of the base body towards the second surface 54", while the second contact strip extends from the second surface 54" of the base body towards the first surface 54'.

The recess 55' is spaced from the inner surface of the case delimiting the seat S and is configured to maintain a predetermined minimum distance from the inner surface of the case delimiting the seat S, optionally during the movement of the perforator 53 between the first and second operating positions, and vice versa. In particular, the recess 55' has a minimum distance from the inner surface of the case delimiting the seat S greater than 0.2 mm, optionally between 0.3 mm and 1 mm.

The recess 55' has a predetermined surface area; the ratio between the surface area of the recess 55' and the predetermined total surface area of the lateral surface 55 of the base body 54 is between 0.2 and 0.7, optionally between 0.25 and 0.5.

In fact, the recess 55' allows to minimize the extension of the lateral surface 55 of the base body suitable for contacting the internal surface of the seat. Also this feature of the base body 54 allows to make the movement of the base body from the first to the second operating position and vice versa quicker. In particular, the presence of the first and second contact strips divided by the recess 55' allows to maintain aligned the base body with the seat S during the movement of the perforator 53 between the various operating positions, while reducing the potential contact surface and therefore the friction that can be generated at the start and during the movement of the perforator.

In Figures 8-10 are shown different operating conditions of the perforator 53. As can be seen, the base body 54 of the perforator 53, when the perforator 53 is arranged in the first operating position, is spaced from said at least one through opening 59; the base body 54 of the perforator, when the perforator 53 is arranged in the first operating position, is configured to allow direct fluid communication between said at least one through opening 59 and the passage opening B of the case 52. This condition is achieved before the activation of the pyrotechnic charge 65 and following the perforation of the pressurized gas container C, i.e., when the gas pushes the perforator from the second to the first operating position. In fact, prior to the activation of the pyrotechnic charge 65 and in the first operating position of the perforator 53, the base body 54 is interposed between the striker 58 and the passage opening B, in particular directly facing the at least one vent 59'.

The base body 54 of the perforator 53, when the perforator 53 is arranged in the second operating position, is arranged in correspondence with said at least one through opening 59; in particular, in this condition, the base body (54) of the perforator, when the perforator 53 is arranged in the second operating position, faces said at least one passage opening and is configured to substantially (at least partially) prevent fluid communication between the passage opening B of the case 52 and said at least one through opening 59. In fact, the base body 54 has a predetermined length L1 defined by the maximum distance between the first and second surfaces 54', 54", measured along the direction of extension D of the case 52. This length L1 is between 5 mm and 20 mm, optionally between 6 mm and 15 mm, and even more optionally between 6 mm and 12 mm. The longitudinal dimensions of the at least one through opening 59 are less than the predetermined length L1 of the base body 54 of the perforator 53. In detail, the ratio between the longitudinal dimension of the at least one through opening 59 and the predetermined length L1 of the base body 54 of the perforator 53 is less than 1, optionally between 0.4 and 0.9, and even more optionally between 0.4 and 0.7. In fact, the extension of the base body 54 of the perforator, when it is in the second operating position, allows the base body to substantially obstruct the at least one through opening and thus prevent the passage of fluid through said opening 59.

During the movement of the base body from the first to the second operating position generated by the pyrotechnic charge 65, the base body moves towards the passage opening B, thus freeing the at least one vent 59' which allows any deposits to escape without, however, excessively limiting the thrust force from the pyrotechnic charge on the perforator 53. Upon reaching the second operating position, it is obtained the perforation of the part of the container C (e.g., the head of a CO₂ cartridge) located inside access A with the consequent exit of gas from the container. The gas initially pushes on the tip 56 and immediately afterwards exerts a pushing action on the entire second surface 54" of the base body 54; thanks to the thrust of the gas, the perforator is quickly moved from the second to the first operating position, with the consequent exit of gas from at least one through opening 59 and therefore the exit of gas from the case 52. The presence of the vent 59' also allows the gas present in the seat S, when the perforator is placed in the second operating position, to escape from the case 52 without generating then a resistive force on the perforator during its movement from the second to the first operating position.

As mentioned above, only the tip 56 of the perforator 53 is configured to pass through the passage opening B during the movement of the perforator 53 from the first to the second operating position, along a direction parallel to the direction of extension D of the case 52. The perforator 53 is therefore movable between the insert 60 and the stop element 57. The first surface 54' of the base body of the perforator, in the first operating position, is configured to contact at least partially the striker 58, optionally the top surface 60b of the insert 60, while the second surface 54" of the base body 54 of the perforator, in the second operating position, is configured to contact the stop element 57.

In detail, the tip 56 has an inclined cutting surface 56'. The cutting surface 56' of the tip 56 is spaced from the second surface of the base body 54 and is inclined with respect to the second surface 54" of the base body 54 from which the tip 56 emerges. In detail, the cutting surface 56' is inclined with respect to the second surface 54" of the base body by an angle between 30° and 80°, optionally between 40° and 70°.

The tip 56 has a substantially cylindrical shape with an oblique cut defining the inclined cutting surface 56'. The oblique cut made on the cylindrical shape of the tip 56 gives the cutting surface 56' a substantially elliptical shape.

The tip has a circular cross-section outside the cutting surface. The circular cross-section of the tip 56 defines a predetermined area, in which the ratio between said predetermined area of the tip and the total area of the second surface 54" of the base body 54 is less than 0.5, optionally between 0.5 and 0.3.

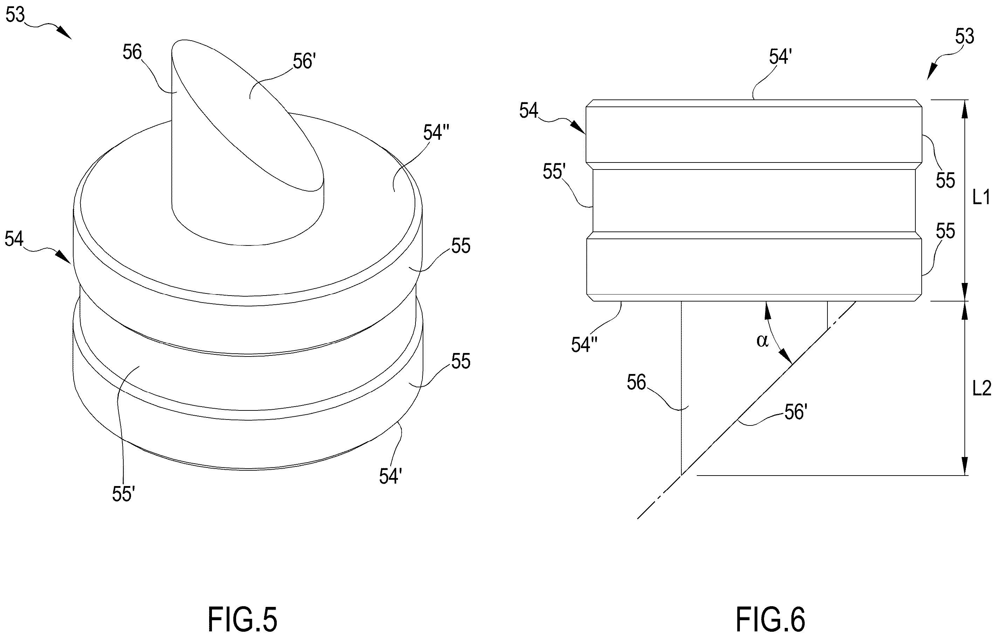

Still in terms of dimensions, the tip 56 has a fixed length L2 (figure 6), measured orthogonally to the lying plane of the second surface 54" of the base body 54 and defined by the distance from the second surface 54" of the base body from which the tip 56 emerges and a point on the perimeter edge with a maximum distance from said second surface 54". Specifically, the predetermined length of the tip 56 is less than 12 mm, optionally between 5 mm and 10 mm. The ratio between the predetermined length L2 of the tip 56 and the predetermined length L1 of the base body 54 is between 0.6 and 1, optionally between 0.65 and 0.85.

### Protective device

Reference sign 1 overall indicates a protective device configured to protect the body of a user from impacts, for example in the event of an accident. For example, the protective device 1 may be wearable, i.e., it may be inserted into or attached to technical sports clothing, such as jackets, vests, and suits for motorcycling and motorsports, or it may be an integral part of such clothing. The protective device 1, object of the present invention, can also define a self-standing wearable protection. As will be described in more detail below, the protective device 1 is configured to inflate using pressurized gas to form a sort of bag designed to absorb any impacts. Obviously, the possibility of creating a fixed type protective device, i.e., engageable to parts of a vehicle (e.g., a car or motorcycle) or to equipment, such as sports equipment, is not excluded.

The protective device 1 may comprise at least one activator 51 in accordance with one or more of the attached claims and/or in accordance with the above description. The protective device 1 may further comprise at least one pressurized gas container C, for example carbon dioxide, engaged to the activator 51. In detail, the container C may comprise a sort of receptacle from which a head emerges, the latter configured to be inserted and coupled to the activator 51. In fact, the container may define a sort of cartridge, for example of carbon dioxide, which can be engaged at least partially in the case 52 of the activator.

As can be seen from the attached figures, the container C may comprise an engagement portion C1, for example at the head, configured to allow the reversible connection of the container to the case. For example, the engagement portion C1 may comprise an external thread configured to allow the screwing of the container to the internal thread V1 of the case 52, defined at the access point. In fact, the structure of the case 52 allows the head of the container C to be inserted. The head of the container C may comprise an opening configured to allow the exit of pressurized gas; container C further comprises a membrane, for example made of metal, placed at the closure of the opening of container C. The perforator 53, during the passage between the first and second operating positions, is configured to contact and break the membrane of container C to allow the gas to exit.

The protective device 1 may comprise a heating element engaged with the pressurized gas container C, for example at least partially in contact with an outer surface of the container. The heating element may be of the active type, i.e., it may comprise a heat generator. The heating element is configured to heat at least part of the container so as to heat the gas inside it, for example, to maintain the gas at a temperature between 30°C and 60°C, and even more advantageously between 35°C and 45°C. For example, the heating element may, in a non-limiting way, comprise at least one electrical resistance at least partially in contact (e.g., directly or indirectly) with an outer surface of the container (e.g., with a lateral wall and/or a bottom area).

Alternatively, the heating element may be of the passive type, i.e., comprise a sort of thermally insulating coating arranged around the container and configured to prevent unwanted pressure drops due to external climatic conditions. As mentioned above, the activator 51 may comprise a control unit. If present, the heating element may be connected to and controlled by the control unit so that the control unit can maintain the container, in particular the gas present in the container, within a desired temperature range. In particular, the activator 51 may comprise a temperature sensor configured to transmit to the control unit a signal representative of the temperature of the container and/or the gas present inside; the control unit is configured to perform a temperature control procedure comprising the following steps:
- receiving the signal from the temperature sensor,
- based on the received signal, estimating a value for the temperature of the container and/or the gas inside it,
- comparing the estimated temperature value with at least one minimum threshold parameter,
- if the temperature value of the container and/or the gas inside is lower than the minimum threshold parameter, sending a control signal to the heating element to heat the container and/or the gas inside it.

The control unit is configured to activate the heating element via the control signal, optionally allowing electric current to pass through the resistance that defines at least part of the heating element.

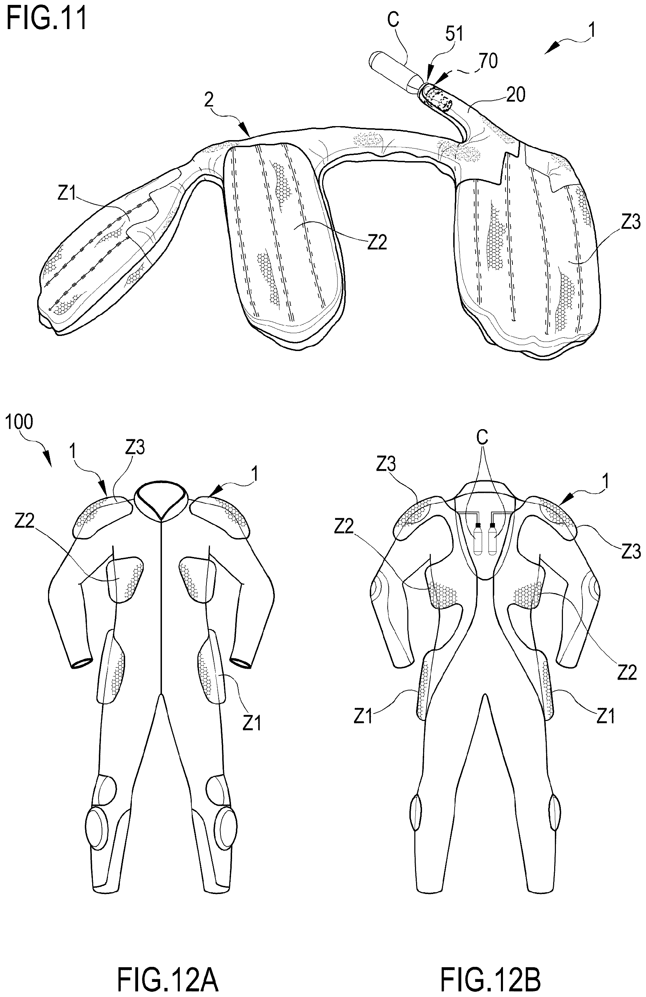

The protection device 1 comprises at least one inflatable element 2 engaged with the activator 51 and configurable between a deflated condition and an inflated condition. In detail, the inflatable element 2 may comprise a connecting conduit 20 that can be engaged externally with respect to the case 52 of the activator 51 to receive a flow of gas exiting the latter and arriving from the pressurized gas container C. In even greater detail, the inflatable element 2 may comprise (Figure 11):
a main body 10 configured to define the part of the inflatable element 2 suitable for protecting a user from impacts,
a connecting conduit 20 integrally joined to the main body 10.

In fact, the connecting conduit 20 is integrally joined to the main body 10 and placed in direct fluid communication with said main body: the main body 10 and the connecting conduit 20 define a single internal volume of the inflatable element 2. The main body 10 is the part of the inflatable element 2 dedicated to protecting the user and/or the part dedicated to contacting a part of the subject's body in the event of an accident. The main body may comprise a single zone or, as illustrated in Figure 11, comprise different zones (see, for example, zones Z1, Z2, and Z3), each of which is configured to contact and/or protect a specific area of a subject's body. The various zones may be connected to each other by means of dedicated connection channels configured to place in fluid communication the various zones. The connecting conduit 20 represents instead the part of the inflatable element 2 engageable with the activator 51 to receive the air flow emitted by the container C and thus allow the inflatable element 2 to pass from the deflated condition to the inflated condition. In detail, as shown in Figures 9 and 10, the part of the case 52 that extends from the first end 52a to at least one through opening 59 is substantially arranged in the inflatable element 2, in particular in the connecting conduit 20. In detail, the case 52 may comprise/comprises a coupling portion V3 arranged between the second end 52b and the at least one through opening 59; the coupling portion V3 is configured to allow the case 52 to engage with the inflatable element 2, in particular with the connecting conduit 20. The coupling portion V3 may comprise at least one of: an external thread, a bayonet system, a quick coupling. As shown in Figures 9 and 10, the engagement portion V1 may be defined inside the case 52, while the coupling portion V3 may be defined outside the case 52, in opposition to the engagement portion V1 of the same case. Still in greater detail, the engagement portion V1 of the case 52 comprises an internal thread V1 opposed to an external thread defined by the coupling portion V3 of the same case. In this way, the engagement portion V1 can allow the engagement of the container C inside the case, while the coupling portion V3 can allow the engagement of the case 52 inside the inflatable element 2.

The inflatable element 2 can therefore be directly engaged to the case 52 by means of threaded portions or by welding and/or gluing. Alternatively, the protective device 1 may comprise a connector 70 configured to connect and place the inflatable element 2 in fluid communication with the internal volume of the case. The connector 70 is, on one side, constrained to the coupling portion V3 of the case 52 and, on the other side, engaged inside the connecting conduit 20 of the inflatable element 2. In fact, the connector 70 can define an intermediate component fixed permanently to the inflatable element 2, for example, by welding and/or gluing; the connector 70 may therefore have a respective engagement portion 72, for example an internal thread, configured to allow rapid and reversible engagement of the inflatable element 2 to the case 52. The connector may comprise a hollow body, having a substantially cylindrical hollow shape with an outer surface engageable with the connecting conduit 20 and an engagement portion 72 defined inside the hollow body.

As shown in Figures 8, 9, and 10, two cables 75a and 75b are present, extending from the pyrotechnic charge 65 and directed towards the outside of the seat S of the activator 51. In an embodiment of particular interest, illustrated for example in Figures 9 and 10, the cables 75a, 75b, or, in the case where only a single cable 75a or 75b is provided, once passed through the one or two passages 64, are routed downward and guided through a corresponding groove 73 (for example obtained by milling) provided at the second end 52b of the case 52. This groove 73 comprises, for example, a first portion 73a extending across the thread of the coupling portion V3, and a second portion 73b extending across the ring defining the second end 52b. As visible in Figure 4, where the cables are not shown, these grooves, whether a single groove for one cable or for two cables passing through the same groove, or two separate grooves, one for each cable, may be arranged along the vertical direction, offset with respect to the through opening 59 (or the through openings 59), so that the cable or cables, once positioned, do not interfere with the outflow of air, CO₂, or gas through the opening 59.

As further visible in the sectional view of Figure 8, a circular gasket 76 is provided at the above-mentioned second end 52b. This gasket 76 can be placed over the cable or cables 75a, 75b once they have been positioned in their respective grooves 73. In this manner, the gasket 76 ensures gas sealing also at the grooves and additionally contributes to retaining the cables in position, preventing any undesired movement thereof. This embodiment is particularly advantageous, as visible for example in Figure 10, since it routes the activation cables to the outside of the inflatable element 2, passing through the coupling region between the engagement portion V3 of the case and the engagement portion 72 of the connector 70. It should be noted that, in general, this also implies that the entire activator 51 must be engaged with the connector 70 by rotation before the cables 75a, 75b can be connected to the corresponding counter-connector of the control unit that commands their activation. This provides an additional degree of safety, since activation can only occur once the activator has been properly engaged with the inflatable element 2.

The connector 70, if present, is configured to define with the case a cavity I (Figures 9 and 10) facing at least one through opening 59 of the case and directly in fluid communication with the internal volume of the inflatable element 2. In fact, following the opening of the container, the gas is configured to pass through the passage opening B to enter the seat S and exit from the case 52 through the at least one through opening 59; the gas then reaches the cavity I and fills the inflatable element 2. In relation to the above, the connector 70 comprises an upper crown 71 configured to surround a lower portion of the case 52 where the through openings 59 are located. In particular, the engagement portion 72 and the upper crown 71 define a single, cylindrically symmetric body configured to be screwed externally onto the activator 51 at the coupling portion V3. Once positioned, these two components form a rigid, yet removable, body that defines the cavity I into which the CO₂ is expelled once the pressurized container C is opened by the perforator 53. As can be seen, for example, in Figure 9, the cavity I comprises a first portion that is substantially annular, having a very limited opening and a substantially constant radial distance from the outer lateral surface of the case 52. The cavity I further comprises an upper region in which the opening and the internal volume increase due to an inclined surface of the upper crown 71 relative to the outer surface of the case 52. This configuration provides an outwardly diverging annular geometry. In this manner, the air or high-pressure gas exiting from the case 52 enters and is directed upward at high speed inside the diverging portion. In certain operating conditions, the pressure drop across the passage opening (B) and the through openings (59) may induce locally choked or near-choked flow, whereby the diverging portion of the connector (70) may further accelerate the gas stream, enhancing the rapid inflation of the inflatable element (2). This is because extremely high gas velocities can be reached within the cavity I, thus ensuring a very rapid transfer of gas from the activator 51 into the inflatable element.

The inflatable element 2 may be made of deformable sheet material, for example, it is at least partly made of at least one of the following materials: polyurethane, PVC, EVA, polyethylene, polypropylene, silicone rubber, rubber. In fact, the inflatable element 2 is configured to assume a flat or stretched configuration depending on the stresses/tensions applied to the material. Furthermore, the inflatable element 2 has a gas-impermeable structure such as to allow the passage of the same element from the deflated condition (relaxed condition of the inflatable element) to an inflated condition, in which the sheet material of the inflatable element 2 is substantially stretched (under tension).

The sheet material of the inflatable element 2 may, for example, be a single-layer plastic film that is gas-impermeable and deformable. In the case of a single-layer plastic film, this can define an elastically deformable structure of the inflatable element. Alternatively, the sheet material of the inflatable element 2 can be made of a multilayer material; for example, the sheet material defining the inflatable element 2 can comprise:
a first layer of plastic film,
a second layer of fabric coupled to the first layer, optionally fixed by glue or heat sealing.

The first layer may be of waterproof type and define the gas barrier layer such as to allow inflation of element 2; for example, the first layer may comprise a plastic film, for example polyurethane, PVC, EVA, polyethylene, polypropylene, silicone rubber, rubber, or similar materials. The second layer can substantially define the structural element of the multilayer sheet, for example configured to prevent the inflatable element from bursting during its passage from a deflated state to an inflated (operational) state; for example, the second layer can be made of fabric, such as nylon or polyester. In the case of multilayer sheet material, this may be deformable but substantially not elastically deformable. The inflatable element 2 may comprise at least one sheet material wall delimiting an internal volume of the inflatable element 2 and having a first and a second portion facing each other; as mentioned above, the inflatable element 2 configurable between:
the deflated condition in which the first and second portions of the at least one wall, for a predominant part of its surface area, are close together and at least partially in contact with each other,
the inflated condition, in which the first and second portions of the at least one wall, for a predominant part of its surface area are spaced apart.

The inflatable element 2, in the inflated condition, defines a greater internal volume than the internal volume defined by the same when arranged in the deflated condition.

For example, the protective device 1 object of the present invention may comprise an inflatable element 2 in accordance with the description in Italian patent application no. 102024000009331, still in relation to the inflatable element 2 (see, for example, the Italian description of patent application no. 102024000009331 from page 18, line 23, to page 24, line 24). Alternatively, the protective device 1 object of the present invention may comprise an inflatable element 2 in accordance with the description in Italian patent application no. 102024000014881, again in relation to the inflatable element 2 (see, for example, the Italian description of patent application no. 102024000014881 from page 18, line 23, to page 21, line 27). The protective device 1 also comprises a case, also made of sheet material, defining a compartment (in particular a single compartment) in which the inflatable element 2 is housed. The compartment delimited by the case defines a single closed internal compartment, in which the inflatable element 2 is entirely contained. In other words, the case defines a sort of closed bag that contains the additional closed bag defined by the inflatable element 2. For example, the protective device 1 object of the present invention may comprise a case in accordance with the description in Italian patent application no. 102024000009331, again in relation to case 3 (see, for example, the Italian description of patent application no. 102024000009331 from page 16, line 16, to page 24, line 24). Alternatively, the protective device 1 object of the present invention may comprise a case in accordance with the description in Italian patent application no. 102024000014881, again in relation to case 3 (see, for example, the Italian description of patent application no. 102024000014881 from page 21, line 28, to page 29, line 34).

The protective device 1 can also comprise a control unit connected to and active in command on the activator 51, wherein the control unit is configured to send a command signal to the activator for the activation of the pyrotechnic charge and the subsequent movement of the perforator 53 from the first to the second operating position.

The protective device 1 may also comprise at least one sensor configured to emit a signal representative of a user condition. The control unit is configured to receive the signal from the sensor; compare the received signal with at least one threshold value of a control parameter; determine, based on the comparison, the presence of an accident condition for the user, and, if such an accident condition is determined, send the control signal to the activator 51 to determine the inflated condition of the inflatable element 2. The at least one sensor may comprise at least one of: a gyroscope, an accelerometer, a GPS.

### Use

It is also object of the present invention a use of the activator 51 and the protective device 1 for the protection of a subject. The activator 51 and the protective device 1 can be used directly as clothing, for example, as an integral part of a suit (see, for example, the schematics in Figures 12A and 12B), a jacket, or a vest (condition not shown), or they can be an integral part of an accessory for protecting a subject (condition not shown), for example, a helmet or a back protector. Alternatively, the protective device 1 can be of the couplable type (removably fixable or engageable) to a garment 100 or an accessory for the protection of a user. Obviously, the possibility of using the activator 51 and/or the protective device 1 as a safety system for vehicles, such as cars, is not excluded.

### Garment

It is also object of the present invention a garment 100 comprising a protective device 1 in accordance with the attached claims. The garment 100 comprises at least one of: a jacket, a vest, a suit (optionally a motorcycle suit or a motorsport suit), technical sportswear. The garment 100 comprises an outer layer and an inner layer. The protective device 1 may be an integral part of the garment. Alternatively, the protective device 1 can be engaged to an inner layer of the jacket, vest, or suit.

## Claims

1. Activator (51) for inflatable protective devices (1), wherein the activator (51) comprises:
• a case (52) extending between a first and a second end (52a, 52b), along an extension direction (D), wherein the case (52) defines within itself a seat (S) extending along the extension direction (D), wherein the case (52) further comprises:
a through access (A) defined at the second end (52b) and configured to receive at least part of a pressurized gas container,
a passage opening (B) defined in the case (52) and which places the seat (S) in fluid communication with the through access (A),
• a perforator (53) housed in the seat (S) of the case (52) and having a base body (54) extending between a first surface (54'), facing the first end (52a) of the case (52), and a second surface (54") opposed to the first surface (54') and facing the second end (52b) of the case (52), wherein the base body (54) further comprises a lateral surface (55) at least partially counter-shaped to an inner surface of the seat (S) and joining the first and second surfaces (54', 54"), wherein the perforator (53) further comprises a tip (56) emerging from the second surface (54") in the direction of the second end (52b) of the case (52), wherein said perforator (53) is movable at least between:
a first operating position where the base body (54) is spaced from the passage opening (B),
a second operating position where at least a part of the tip (56) passes through said passage opening (B), wherein the second surface (54") has a predefined area and the passage opening (B) defines a predetermined minimum passage area,
• a pyrotechnic charge (65) housed in the case (52) and configured to cause the movement of the perforator (53) from the first to the second operating position, the pyrotechnic charge (65) facing the first surface (54') of the base body of the perforator (53),
the ratio between the minimum passage area of the passage opening (B) and the area of the second surface (54") is greater than 0.6, optionally between 0.7 and 1, and even more optionally between 0.9 and 1.

2. Activator according to claim 1, wherein the case (52) comprises a stop element (57) configured to define the passage opening (B) and configured to contact the second surface (54") of the base body (54) of the perforator (53) when in the second operating position, wherein the case (52) comprises a hollow body and the stop element (57) is in a single piece with the hollow body of the case (52), in particular the stop element (57) comprises a ring, having an inner perimeter edge delimiting the passage opening (B) of the case (52).

3. Activator according to any one of the preceding claims, wherein the case (52) has at least one through opening (59) configured to put the seat (S) in fluid communication with the environment outside the case, wherein the through opening (59) is defined at the passage opening (B) of the case,
when the perforator (53) is in the first operating position, a first chamber is defined inside the seat (S), between an inner surface of the case (52), the second end (52b) of the case (52), the passage opening (B), and the second surface (54") of the perforator (53), the at least one through opening (59) being in fluid communication with the first chamber and with the passage opening (B), and
when the perforator (53) is arranged in the second operating position, the at least one through opening (59) is no longer in fluid communication with the first chamber and with the passage opening (B), and a second chamber is defined between the first surface (54') of the perforator (53), an inner surface of the case (52), and a lower surface of an insert (60) associated with the first end (52a) of the case (52), wherein in the second operating position, at least one vent (59') provided in the case (52) allows fluid communication between the second chamber and an external environment, the vent (59') no longer being in fluid communication with the second chamber when the perforator (53) is in the first operating position.

4. Activator according to claim 3, wherein the at least one through opening (59) comprises a plurality of through openings, in particular a number of through openings between 2 and 12, optionally between 4 and 10,
wherein said plurality of through openings is uniformly distributed on a lateral wall of the case substantially along a plane orthogonal to the extension direction (D) of the case.

5. Activator according to claim 3 or 4, wherein said at least one through opening (59) defines a total gas passage section smaller than the gas passage section defined by the passage opening (B) of the case (52),
wherein the total gas passage section defined by said at least one through opening (59) has a predetermined area, wherein the ratio of the predetermined defined area of the total gas passage section of said at least one through opening (59) to the predetermined area defined by the passage opening (B) of the case (52) is between 0.7 and 0.98, optionally between 0.75 and 0.9.

6. Activator according to any one of the preceding claims, wherein the lateral surface (55) of the base body (54) of the perforator (53) comprises:
at least one contact strip configured to contact an inner lateral surface of the case (52) delimiting the seat (S) and counter-shaped to the inner lateral surface of the housing delimiting the seat (S),
at least one recess (55') away from the inner lateral surface of the case delimiting the seat (S),
wherein the recess (55') is configured to maintain a predetermined minimum distance from the inner lateral surface of the case delimiting the seat (S) during the movement of the perforator (53) between the first and second operating positions, and vice versa.

7. Activator according to claim 6, wherein the at least one contact strip extends in height substantially from the first surface (54') of the base body in the direction of the second surface (54"), and/or substantially from the second surface (54") of the base body in the direction of the first surface (54').

8. Activator according to claim 7, wherein the at least one contact strip comprises a first and a second contact strips spaced apart from each other by means of the at least one recess (55'),
the first contact strip extending from the first surface (54') of the base body towards the second surface (54"),
the second contact strip extending from the second surface (54") of the base body towards the first surface (54'), the recess (55') being spaced from the inner lateral surface of the case delimiting the seat (S),
optionally wherein the first and second contact strips and the recess (55') are symmetrical with respect to the extension direction (D).

9. Activator according to any one of the preceding claims, wherein the tip (56) has an inclined cutting surface (56') spaced from the second surface of the base body (54), wherein the cutting surface (56') is inclined with respect to the second surface (54") of the base body (54) from which the tip (56) emerges by an angle between 30° and 80°, optionally between 40° and 70°.

10. Activator according to any one of the preceding claims, further comprising an insert (60) housed at least partially in the case (52) and positioned substantially at the first end (52a), the insert (60) being insertable into the seat (S) from the second end (52b) of the case (52) and engaged therein, the insert (60) comprising a striker (58) arranged inside the case (52), wherein the striker (58) is configured to contact the perforator (53) in the first operating position and to act as an end-stroke element for the perforator (53), the perforator (53) being interposed between the striker (58) and a stop element (57) located at the passage opening (B), the stop element (57) being configured to receive, in abutment, the second surface (54") of the base body (54) of the perforator (53) in the second operating position, thereby preventing further axial movement of the perforator (53) towards the through access (A).

11. Activator according to claim 10, wherein the insert (60) has a cavity (62) facing the perforator (53) and configured to house the pyrotechnic charge (65), the cavity (62) of the insert (60) directly facing the first surface (54') of the base body (54) of the perforator (53), and
wherein the striker (58) surrounds a lower end of the cavity (62) facing the first surface (54') of the base body (54), in particular the lower end having an area smaller than an area of the first surface (54') of the base body (54), and optionally being centrally located with respect to the extension direction (D).

12. Activator according to claim 11, wherein the lower end of the cavity (62) comprises a closure membrane (74) defining, together with the cavity (62), a closed volume housing the pyrotechnic charge (65), the closure membrane (74) being configured to open upon ignition of the pyrotechnic charge (65) and during a movement of the perforator (53) from the first to the second operating position.

13. Activator according to any one of the preceding claims, wherein a length (L2) defined by the distance between the second surface (54") of the base body from which the tip emerges and a point on the perimeter edge that is at a maximum distance from said second surface (54") corresponds to a stroke of the perforator (53) from the first operating position to the second operating position.

14. Activator according to any one of the preceding claims, wherein the case (52) comprises a coupling portion (V3) arranged between the second end (52b) and the at least one through opening (59), said coupling portion (V3) being configured to allow the engagement of the case to an inflatable element,
wherein the coupling portion (V3) comprises at least one cross seat (73) configured to allow the accommodation of one or more cables (75a, 75b) connected to the pyrotechnic charge (65), the at least one cross seat (73) being arranged so that, once the activator (51) is engaged with the inflatable element (2), the cable or cables can pass through the coupling portion (V3) and emerge at the second end (52b) of the case (52), the at least one cross seat (73) comprises at least one groove, optionally two grooves, each groove comprising a first portion (73a) arranged at a threaded region of the coupling portion (V3) and a second portion (73b) arranged at a ring defined at the second end (52b) of the case (52), wherein no thread teeth are present at said first portion (73a) of the groove (73),
optionally the case (52) further comprises a gasket (76) and a gasket seat positioned at the coupling portion (V3), the one or more cables (75a, 75b) being interposed between the gasket (76) and the coupling portion (V3).

15. Protective device (1), optionally of the wearable type, comprising:
at least one activator (51) in accordance with any one of the preceding claims,
at least one container (C) of pressurized gas, for example carbon dioxide, connected to the activator (51),
at least one inflatable element (2) engaged to the activator (51) and configurable between a deflated condition and an inflated condition,
a connector (70) configured to connect and place the inflatable element (2) in fluid communication with the internal volume of the case (52), the connector (70) being, on one side, removably constrained to a coupling portion (V3) of the case (52) and, on the other side, engaged within the connecting conduit (20) of the inflatable element,
wherein the activator (51) is configured to act on the container (C) to allow its perforation and the consequent release of gas to allow the passage of the inflatable element (2) from the deflated condition to the inflated condition.
